# EUROPEAN PATENT SPECIFICATION

(11) **EP 1 075 105 B1**
(45) Date of publication and mention of the grant of the patent: **30.11.2005**
(21) Application number: 00305519.1
(22) Date of filing: 30.06.2000
(51) Int. Cl.: H04J 14/02

(54) **Autoprotected optical communication ring network**
Selbstgeschütztes optisches Kommunikationsringnetzwerk
Réseau de communication en forme d'anneau auto-protégé

(30) Priority: 01.07.1999 EP 99112552
(43) Date of publication of application: 07.02.2001
(73) Proprietor: Cisco Photonics Italy SrL, 20126 Milan (IT)
(72) Inventor: Arecco, Fulvio, 20052 Monza (MI) (IT); Viscardi, Valerio, 20037 Paderno Dugnano (MI) (IT)
(74) Representative: Crawford, Andrew Birkby

(56) References cited:
- EP-A- 0 729 247
- US-A- 5 647 035

## Description

### TECHNICAL FIELD

The present invention relates to an optical communication system, and more particularly to a WDM (Wavelength Division Multiplexing) autoprotected optical communication nng network.

"Optical communication ring network" as used herein refers not only to an entire communication network that is configured as a ring, but in general, any section of a network that comprises a plurality of nodes and branches, and that is arranged, at least temporarily, in a ring configuration.

"Failure" as used herein refers to any event or condition which may affect the physical optical carriers (e.g., breakage or interruption of an optical fiber) and/or the devices of the network that operate on the transmitted signals (e.g., receivers, demultiplexers, amplifiers, etc.), in such a way as to bring about a situation of degradation of the transmission below a tolerable level; the term "failure" thus should in no way be interpreted as being limited only to events causing the complete interruption of the connection.

### BACKGROUND ART

The state of the art includes many methods to optically protect a set of wavelength multiplexed optical channels that are carried by a two-fiber optical ring network. European Patent Application No. 769859 (in the name of the Applicant) relates to a transparent optical self-healing-ring communication network in which at least two nodes are optically connected along a first and a second closed optical path having opposite transmission directions. Each node simultaneously feeds its transmitted signals to the first and the second closed optical pathes, so that the signals travel along complementary arcs of the ring. The receiving node selectively receives the signals from one of the two closed paths and, in case of failure on this closed path, switches reception on the other closed path. The Applicant observes that this Optical Channel Protection method, known as a "Optical Channel 1+1 Dedicated Ring Protection" method; requires that, for each wavelength used on one closed path, the same wavelength cannot be used on the other closed path other than for protection. Thus, with N wavelengths, only N protected channels can be used in the network.

European Patent Application No. 97123013.1-2209 (filed on December 31, 1997 by the Applicant) relates to a method and an apparatus for transparent optical communication with two-fiber bidirectional ring with autoprotection and management of low priority traffic. The communication network comprises two optical fibers (an external one and an internal one) that interconnect the nodes. According to the proposed technique, if a first and a second node of the network are considered for mutual signal transmission, a high-priority traffic can be set up on a first bidirectional communication path defined between the two nodes on the external and internal fibers, using only an arc of the communication ring defined between the two nodes.

The arc complementary to that just described can be used as a second bidirectional communication path between the two nodes for low-priority traffic, using the same wavelength as the preceding channel. The protection mechanism consists of redirecting the high-priority traffic onto the second path in the case of a breakdown or degradation of communication on the first path, thus losing the low-priority traffic on the second path. This protection method is identifiable as a "Optical Channel 1:1 Dedicated Ring Protection" method with management of Low-Priority traffic. It is observed that, although this method provides a double capacity with respect to the previous technique, with N wavelengths it is still not possible to protect more than N channels.

An article entitled "MA Transparent, All-Optical, Metropolitan Network Experiment in a Field Environment: The 'PROMETEO' Self-Healing Ring", F. Arecco et al., IEEE Journal of Lightwave Technology, Vol.5, Dec 1997, describes a method of providing protection against failures in a metropolitan ring network. According to this method, a working fiber ring is used to carry all the optical channels between nodes, while a protection fiber ring carries no traffic under normal operating conditions. In case of a failure, protection switching takes place at the nodes adjacent to the failure, reconfiguring in such a way as to route all the optical channels (i.e., all the wavelengths of the multiplex section) through the protection fiber ring to bypass the failure. This protection method is known as "Optical Multiplex Section Protection" method. It is once again observed that with N wavelengths, only N protected channels can be used. Additionally, under this approach, it is not possible to have different protection mechanisms (i.e., protection at different layers) for different channels, and that the optical path after a protection reconfiguration can be longer than the ring circumference.

U.S. Patent No. 5,647,035 discloses a ring network communication structure on an optical carrier and a reconfigurable node for the structure. In the structure, a plurality of nodes are interconnected by means of connections that include at least a first and a second optical carrier, such as an optical fiber. Transmission between two nodes occurs on the ring according to a WDM scheme, by utilizing a first wavelength for communication in one direction on the first carrier and a second wavelength for communication in the opposite direction on the second carrier. The second wavelength on the first carrier and the first wavelength on the second carrier are reserved for protection (protection channels) and are "shared" among all the nodes. Under regular operation conditions of the network, in each node the signals conveyed by the two fibers are detected, processed as required in units of a higher hierarchical level, converted again in optical signals and re-transmitted towards a subsequent node. In the presence of a failure on one of the connections, the nodes adjacent to the failed connection reconfigure themselves to ensure the continuation of communication on the alternative path provided by the ring, by utilizing the first wavelength on the second carrier and the second wavelength on the first carrier. The described exemplary embodiment referring to just two wavelengths λ₁, λ₂, can be generalized to any number of wavelengths with a corresponding expansion of the described connection; switching matrices of the nxn type may be used.

In the ring network of US 5,647,035, if multi-wavelength signals have to be managed, since signal re-routing is localized at the nodes adjacent to the failure, the protection operations have to be performed on the entire set of wavelengths of the multiplex section (as described for SDH in ITU-T Recommendation G-803 and G-841) and the reconfigured nodes must re-route all the working channels that were previously sent on the damaged ring segment to their respective protection channels running onto the complementary ring arc. This technique is then identifiable as an "Optical Multiplex Section Shared Protection" technique. Accordingly, each node in the network must be equipped with the optical switching tools for the complete set of wavelengths in the ring, and a switch matrix is then needed with a complexity which increases considerably with increasing the number of channels (e.g., if each channel carries 2.5 Gb/s and the system is adapted to transmit 16 channels, each matrix must be able to switch 16 x 2.5 Gb/s). The number of optical switching blocks that are required to protect N to MN/2 number of links (where N is the number of wavelengths and M the number of nodes) is always MN.

Furthermore, it is observed that in the Optical Multiplex Section Shared Protection, because the failure control is performed at the multiplex section level, a failure on a single optical channel (e g., when a node transmitter is damaged) may be either ignored or may cause the reconfiguration of all the traffic, thereby causing a temporary failure of all the other working channels.

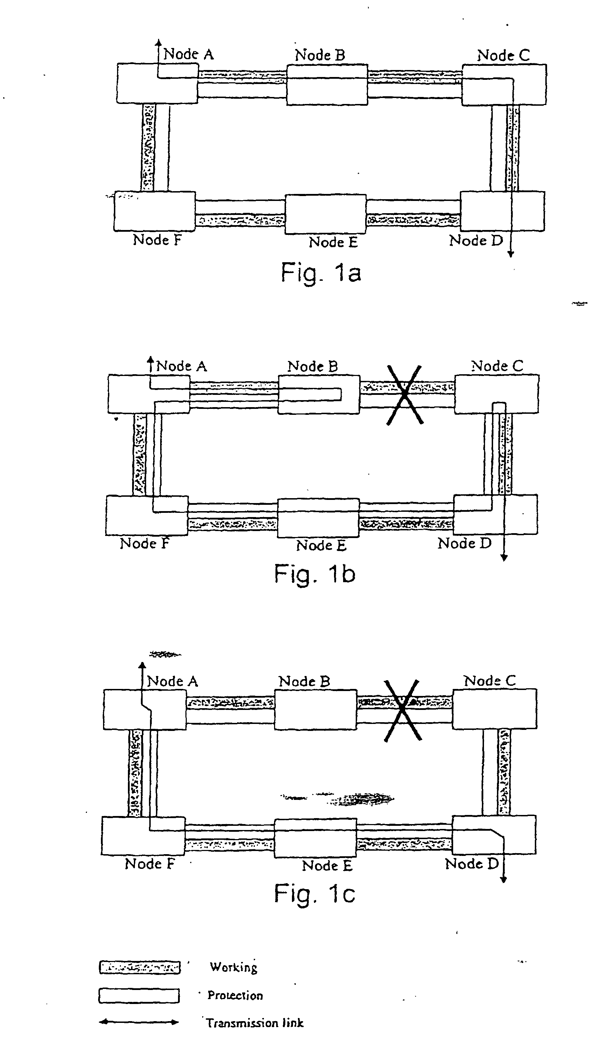

It is also noted that, in case such a network is reconfigured as a consequence of a failure, the protection path of a generic optical channel may be longer than the maximum ring circumference. This can occur when a generic bidirectional link is set up between two non-adjacent nodes in the network, as illustrated in Figure 1 a (where nodes A and D are involved). In case of failure the switching action is performed by the two nodes adjacent to the failure (i.e., nodes B and C), as shown in Figure 1b. Each channel of the bidirectional link travels along the working path from the source node to one of the reconfigured nodes where it is routed into the protection path. Then it travels in opposite direction along all the ring network to the other reconfigured node where it is routed again on the working path and, finally, it reaches the destination node. This alternative optical channel path may have a length that exceeds the ring circumference, reaching values of several hundred kilometers and thus, causing a low S/N ratio and high levels of attenuation. In case of a transoceanic application, this protection solution may lead, due to loopbacks, to restoration transmission paths that would cross the ocean three times.

To overcome this problem, a different protection solution has been proposed, which is referred to as a "MS Shared Protection Ring - Transoceanic Application" in the Annex A of the Telecommunication Standard ITU-T Recommendation G.841. A failure is detected at the two nodes that are adjacent to the failure at the SDH multiplex section layer; subsequently, the nodes terminating the failed links are informed of the failure condition, causing a re-routing of the corresponding links on the complementary ring arc path, as illustrated in Figure 1c. In other words, in case of failure, all the transmission links that are affected by the failure are bridged at their source nodes onto the protection channels that are directed away from the failure. When the affected links reach their final destination nodes, they are switched to their original drop point. Therefore, no loopbacks are established; and thus, there is no risk of having, in case of failure, restoration transmission paths that cross the ocean additional times.

U.S. Patent No. 5,647,035 proposes a solution in which the failure control is over the entire optical multiplex section. It is noted that this solution may result in ignoring a failure on a single optical channel. In addition, the failure may casue the reconfiguration of all the traffic, resulting in temporary failure of all other working channels.

It is observed that a protection at the SDH layer requires a relatively complex electronic layout. Such a solution can operate only at a predetermined bit rate.

EP-A-0 729 247 discloses a communication network which has a bidirectional glass fibre ring mains and each conductor handles two signals of different wavelengths. In one example a 1310 nm wavelength signal is used as an operating signal and a 1550 nm signal as a reserve signal. Each network element has interfaces for transmissions in the ring in east and west directions: Input and outputs are handled via optical multiplexer/demultiplexer stages. The network is such that for fault free conditions the first wavelength signal can be used for exchanges between network elements, while at the same time the second wavelength may also be used to maximise transmission capacity.

### DISCLOSURE OF INVENTION

The present invention provides an improved shared protection technique, in which re-routing operations are performed only at the nodes that terminate the affected links and only on the failed channels, thus avoiding the drawbacks related to re-routing operations on the multiplex section. An optical reconfigurable connection mechanism allows the omission of a SDH layer protection mechanism. Moreover, the failure control is performed at the channel level, instead of the multiplex section level, thus overcoming the above mentioned drawbacks.

In the proposed network, the nodes communicate in pairs (defining bi-directional links), and under normal conditions, are optically configured to exchange signals on a respective working arc path at a respective first wavelength on a first carrier of the network and at a respective second wavelength on a second carrier of the network. In the complementary arc, the same wavelengths may be used in the same manner to define other links, while the first wavelength on the second carrier and the second wavelength on the first carrier are reserved for protection and are used in case of failure that affects one of the links. Each node of the proposed network is provided with a pair of OADM (Optical Add/Drop Multiplexers) for extracting from, and inserting in, the optical multiplex section, only the channels which the node is adapted to operate on. All the remaining channels are passed-through. Each node is further provided with a receiving/transmitting module for each pair of wavelengths defining a transmission link, said module optically connecting, in a selective way, the OADMs to optical transmitters and receivers operating at the wavelengths. Each receiving/transmitting module performs failure control and re-routing operations on the two corresponding wavelengths. Consequently, in case of failure, if one of the links managed by this node fails, the corresponding receiving/transmitting module, after detecting the failure by checking the channels status, is reconfigured in order to optically re-route the transmission on the complementary portion of the ring. The same operation is performed by the node at the other end of the failed link. Therefore, only the nodes that manage the affected links are optically reconfigured, and only the failured channels (instead of the global multiplex section) are re-routed.

The protection technique of the invention provides a number of advantages. By performing protection at the channel level, optical protection can be provided to a selected subset of optical channels, leaving the protection of the remaining channels up to the other layers (e.g., SDH) or to other optical protection mechanisms. Using an optical re-routing technique, it is possible to omit the SDH protection layer, thereby simplifying the node structure and allowing a direct connection to the ring network for clients using different protocols (possibly unprotected) like ATM, IP, etc. The proposed protection technique is therefore compatible with every client electronic transmission protocol.

The receiving/transmitting module in the protection scheme of the present invention includes an optical switching unit which, in contrast to the SDH switching layouts, can operate at different bit rates (e.g., 155 Mbit/s, 622 Mbit/s, 2,5 Gbit/s, 10 Gbit/s). The protection approach of the present invention enables client to client protection, because a failure is detectable, even if it affects a single channel. The prior art techniques generally allow only global failure detection on the multiplexed flux (by using threshold photodiodes). The number of switching blocks is always two times the number of protected channels (i.e., between 2N and MN, where N is the number of wavelengths and M the number of nodes) thus giving an advantage, with mixed traffic patterns, over the Optical Multiplex Section Shared Protection schema proposed in US 5,647,035. For example, with 8 nodes, 32 wavelengths optical ring network (M=8, N=32), the required number of switching blocks for said Optical Multiplex Section Shared Protection schema is always 256. However, by using the Optical Channel Shared Protection schema of the present invention, the required number of switching blocks varies between 64 (in case of "hub traffic", i.e., one node communicating with all the other nodes) and 256 (in case of "uniform traffic", i.e., one node communicating only with its two adjacent nodes).

Since the reconfiguration takes place at the channel level instead of at the multiplex section level, there is no need to provide each node with a switching equipment to perform protection on all the network channels (in particular, it is then not necessary to use a complex switch matrix as in the Optical Multiplex Section Shared Protection scheme).

Unlike the Optical Multiplex Section Shared Protection scheme proposed in US 5,647,035, the complexity of the node switching structure depends only on the number of links that are managed by the nodes, not on the number of wavelengths in the network. Additionally, the switching operations are performed external to the network; as such, no transitories are present. In particular, switching of the single channel is performed, as described below, between the receiving and the transmitting transponders. Therefore, the multiplexed optical flux conditions at the input of the node amplifier are substantially unchanged. Consequently, sudden power variations inside the network are avoided.

According to one aspect of the present invention, an autoprotected optical communication system comprises a first optical carrier that is configured to transport optical signals in a first direction. A second optical carrier is configured to transport optical signals in a second direction that is opposite to the first direction. A plurality of nodes are connected along the first optical carrier and the second optical carrier to form bidirectional links. The plurality of nodes communicate in pairs. One of the pairs defines a working link that is associated with a portion of the first optical carrier and a portion of the second optical carrier. The pair of nodes are configured to exchange optical signals using a first wavelength on the first optical carrier and a second wavelength that is different from the first wavelength on the second optical carrier during a normal condition. The one pair of nodes are configured to exchange optical signals using the first wavelength on the second optical carrier and the second wavelength on the first optical carrier during a failure condition.

Preferably, each of the plurality of nodes selectively uses a predetermined subset of wavelengths within a set of transmission wavelengths (λ₁, λ₂, ..., λ_{N}). Each of the plurality of nodes comprises a plurality of optical add/drop multiplexers that are serially connected to the first optical carrier and the second optical carrier, respectively. Each of the optical add/drop multiplexers is configured to selectively perform at least one of adding the subset of wavelengths to the first optical carrier and to the second optical carrier, dropping the subset of wavelengths from the first optical carrier and the second optical carrier, and bypassing remaining wavelengths of the set of transmission wavelengths (λ₁, λ₂, ..., λ_{N}),

Preferably, each of the plurality of nodes comprises an optical transmitter, an optical receiver, and a reconfigurable optical switch unit that selectively couples the optical transmitter and the receiver to the first optical carrier and the second optical carrier.

Preferably, each of the plurality of nodes comprises a plurality of information insertion devices that optically coupled to the optical transmitter and configured to insert signalling information into the optical signals. A plurality of information extraction devices optically are coupled to the optical receiver and configured to extract signalling information from the optical signals.

Preferably, the plurality of information insertion devices and the plurality of information extraction devices include optical transponders that optically couple the optical switch unit to the first optical carrier and the second optical carrier. The optical transponders are configured to change wavelengths of the optical signals.

According to another aspect of the present invention, a method of providing autoprotection in an optical ring network, which includes a first optical carrier, and a second optical carrier, and a plurality of nodes that are connected along the first optical carrier and the second optical carrier and are configured to communicate in pairs to define bidirectional links, is disclosed. The method includes exchanging optical signals between one of the pairs of nodes over one of the bidirectional links by using a first wavelength on the first optical carrier and a second wavelength on the second optical carrier during normal operation. The method also includes detecting a failed link among the bidirectional links, and reconfiguring the nodes in the one pair to invoke a protection scheme that uses the first wavelength on the second optical carrier and the second wavelength on the first optical carrier to avoid the failed link.

Preferably, the method also includes using a predetermined subset of wavelengths within a set of transmission wavelengths that are carried by the first optical carrier and the second optical carrier, wherein the step of exchanging includes optically separating, at each node of the plurality of nodes, each wavelength of the subset of wavelengths from the set of transmission wavelengths.

Preferably, the step of detecting includes verifying, in each of the plurality of nodes and for each wavelength in the set of wavelengths, whether the optical signals are received.

Preferably, the step of detecting includes verifying, in each of the plurality of nodes and for each wavelength in the set of wavelengths, whether the optical signals are degraded.

Preferably, the step of detecting includes verifying, in each of the plurality of nodes and for each wavelength in the set of wavelengths, whether the optical signals include a failure message.

Preferably, the method further includes transmitting a failure message between the nodes in the one pair based upon at least one of non-receipt of the optical signals and receipt of the optical signals that are degraded.

Preferably, the step of reconfiguring includes switching optical connections which selectively couple an optical transmitter and an optical receiver to the first optical carrier and the second optical carrier.

According to yet another aspect of the present invention, a reconfigurable node of an autoprotected optical communication ring network, which has a first optical carrier and a second optical carrier, comprises an optical transmitter that is configured to generate optical signals. An optical receiver (Rx₁) is configured to receive optical signals. A plurality of transmitting transponders are optically coupled to the first optical carrier and the second optical carrier. A plurality of receiving transponders are optically coupled to the first optical carrier and the second optical carrier. A plurality of optical switches are coupled to the transmitting transponders and the receiving transponders. One of the optical switches is coupled to the optical transmitter; another one of the optical switches is coupled to the optical receiver. The optical switches are configured to operate selectively under a normal operating condition and under a failure condition. The transponders use a first wavelength on the first optical carrier and a second wavelength that is different from the first wavelength on the second optical carrier during the normal condition. During the failure condition, the transponders use the first wavelength on the second optical carrier and the second wavelength on the first optical carrier.

Preferably, the plurality of transmitting transponders include a first transmitting transponder that is optically coupled to the first optical carrier and is configured to modulate a signal at the first wavelength. A second transmitting transponder (TxT₁(λ_{y})) is optically coupled to the first optical carrier and is configured to modulate a signal at a second wavelength. A third transmitting transponder is optically coupled to a second optical carrier and is configured to modulate a signal at the first wavelength. The plurality of receiving transponders include a first receiving transponder that is optically coupled to the first optical carrier and is configured to demodulate a signal at the first wavelength. A second receiving transponder is optically coupled to the first optical carrier and configured to demodulate a signal at the second wavelength. A third receiving transponder is optically coupled to the second optical carrier and is configured to demodulate a signal at the second wavelength. Under the normal condition, the optical switches are configured to connect the optical transmitter to the first transmitting transponder and to the third transmitting transponder, to connect the first receiving transponder to the third transmitting transponder, to connect the second receiving transponder to the optical receiver, and to connect the third receiving transponder to the optical receiver and to the second transmitting transponder.

Preferably, the node further includes another optical transmitter that is configured to generate an optical signal that includes information to be transmitted in the network, and another optical receiver that is configured to receive an optical signal that includes information has been transmitted in the network. The plurality of transmitting transponders includes a fourth transmitting transponder that is optically coupled to the second optical carrier and is configured to modulate a signal at the second wavelength. The plurality of receiving transponders include a fourth receiving transponder that is optically coupled to the first optical carrier and is configured to demodulate a signal at the first wavelength. During normal condition, the optical switches are configured to connect the first receiving transponder to the third transmitting transponder and to the other receiver, to connect the fourth receiving transponder to the other receiver, and to connect the other optical transmitter to the second transmitting transponder and to the fourth transmitting transponder.

Preferably, the first wavelength and the second wavelength are selected from a set of transmission wavelengths (λ₁, λ₂, ..., λ_{N}). The node further includes a plurality of optical add/drop multiplexers that are configured to optically couple the transmitting transponders and the receiving transponders to the first optical carrier and the second optical carrier to feed and extract a subset of wavelengths from the optical carriers, and to pass-through a remaining wavelengths of the set of transmission wavelengths (λ₁, λ₂, ..., λ_{N}),

Preferably, the optical switches include 2x2 switches, or alternatively, 1x2 and 2x 1 switches.

Preferably, the optical switches include discrete switching components or, alternatively, an integrated switching matrix.

Preferably, the optical switches include at least one of opto-mechanical switches, thermo-optical switches, magneto-optical switches, liquid crystal switches, semiconductor switches, electro-optical switches, micro-mechanical switches, and lithium niobate integrated circuit switches.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
Figures 1a, 1b, 1c show a conventional network ring under normal condition, failure condition with a multiplex section shared protection, and failure condition with a multiplex section shared protection - transoceanic application, respectively;
Figure 2 is a schematic representation of an optical communication network operating under normal conditions and in which, by way of example, two transmission links are defined, according to an embodiment of the present invention;
Figure 3 is a diagram of a node in the network of Figure 2, including a switching unit comprising 2x2 switches and operating under normal conditions;
Figure 4 is a diagram of a switching unit comprising lx2 and 2x1 switches used in the network of Figure 2 in place of the switching unit comprising 2x2 switches, operating under normal conditions;
Figure 5 is a diagram of a switching unit comprising an integrated switching circuit used in the network of Figure 2 in place of the switching unit comprising 2x2 switches, operating under normal conditions;
Figure 6 is a diagram of a sub-equipped node for the network of Figure 2, adapted to manage only one transmission link and including 2x2 switches;
Figure 7 is a diagram of a switching unit comprising 1x2 and 2x1 switches used in the network of Figure 6 in place of the switching unit comprising 2x2 switches, under normal operating conditions;
Figure 8 is a diagram of a switching unit comprising an integrated switching circuit used in the network of Figure 6 in place of the switching unit comprising 2x2 switches, under normal operating conditions;
Figure 9 is a diagram of the network of Figure 2 under a failure condition;
Figure 10 is a diagram of the reconfiguration of the node of Figure 3 when a failure occurs on the left-hand side of the node;
Figure 11 is a diagram of the reconfiguration of the switching unit of Figure 4 when a failure occurs on the left-hand side of the node;
Figure 12 is a diagram of the reconfiguration of the switching unit of Figure 5 when a failure occurs on the left-hand side of the node;
Figure 13 is a diagram of the reconfiguration of the node of Figure 3 when a failure occurs on the right-hand side of the node;
Figure 14 is a diagram of the reconfiguration of the switching unit of Figure 4 when a failure occurs on the right-hand side of the node; and
Figure 15 is a diagram of the reconfiguration of the switching unit of Figure 5 when a failure occurs on the right-hand side of the node.

### MODES FOR CARRYING OUT THE INVENTION

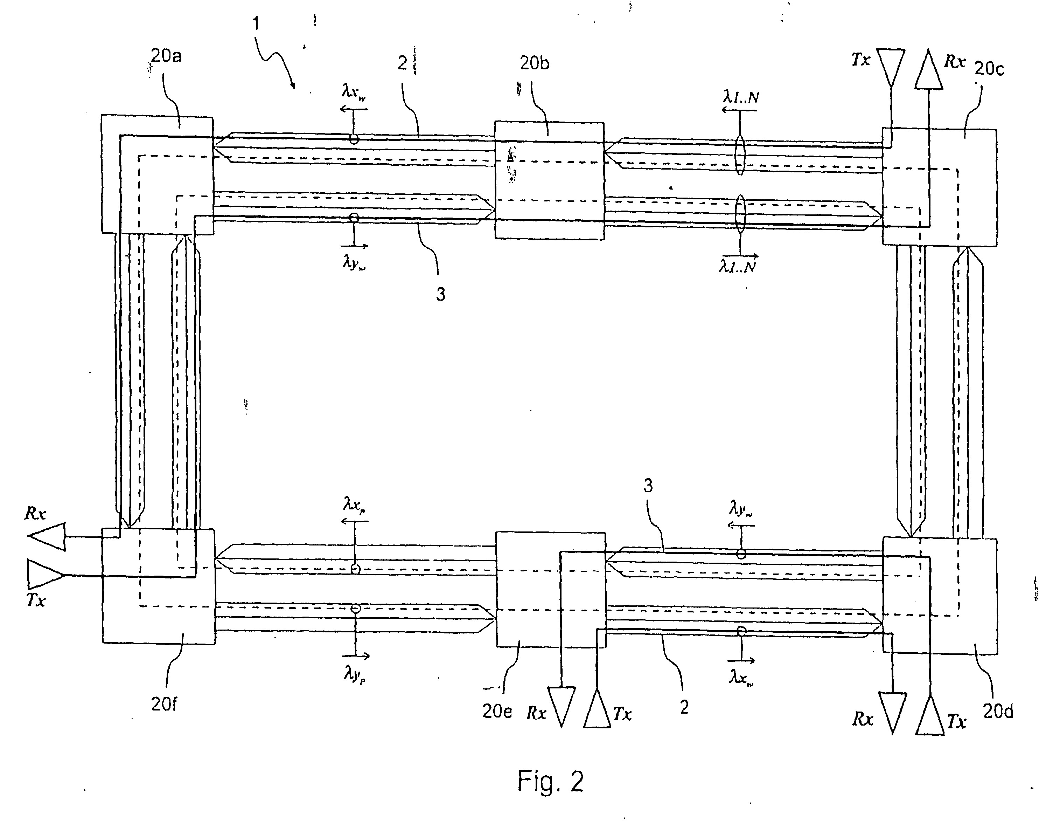

Schematically shown in Figure 2 is an optical communication ring network 1 according to an embodiment of the present invention. Network 1 includes a first and a second optical fiber ring 2, 3 defining respective optical carriers that have opposite transmission directions. The network 1 also includes a plurality of nodes 20a-20f, which are positioned along the first and the second ring 2, 3, for adding and dropping optical signals. Network 1 is adapted for both terrestrial transmissions and transoceanic transmissions. For long-haul transmissions, in particular, transoceanic transmissions, network 1 is preferably provided with line optical amplifiers and/or boosters and/or preamplifiers (not shown).

In Figure 2, rings 2, 3 define an external ring having a counter-clockwise transmission direction and an internal ring with a clockwise transmission direction, respectively. The number of nodes in network 1, by way of example, is six; however, the present invention has applicability to networks with any number of nodes. Furthermore, in the example of Figure 2, network 1 is shown to have two optical fibers; it is recognized by one of ordinary skill in the art that the nodes can be connected by any number of optical carriers.

Communication in network 1 is achieved according to a Wavelength Division Multiplexing (WDM) scheme using different channels at respective wavelengths on each ring. In particular, rings 2, 3 are adapted to convey optical signals in the transmission channels defined by a set of transmission wavelengths λ₁, λ₂, ..., λ_{N} within a predetermined wavelength transmission band.

Each of the nodes 20a-20f is adapted to manage a respective subset of wavelengths within the set of transmission wavelengths λ₁, λ₂, ..., λ_{N} and to define bidirectional communication with one or more of the other nodes of network 1. Each pair of nodes, which is arranged to mutually communicate, splits network 1 into two complementary arc paths, at least one of which (identifiable as a "working path") allows bidirectional transmission between the two nodes under normal operating conditions (i.e., without failures), and the other (identifiable as a "protection path") accepts re-routed transmissions in the presence of a failure in the working path.

A pair of nodes are arranged to exchange data through the use of wavelengths λₓ, λ_{y}. Under normal operating conditions, on the working path as defined by the pair of nodes, a bi-directional working link is established by transmitting optical signals at the first wavelength λₓ on the external ring 2 (in the counter clockwise direction) and at the second wavelength λ_{y} on the internal ring 3 (in the clockwise direction). The second wavelength λ_{y} is not used on the external ring 2; the first wavelength λₓ is used on the internal ring 3. The second wavelength λ_{y} and the first wavelength λₓ can then be used on the external ring 2 and, respectively, on the internal ring 3, to provide optical protection, as hereinbelow described. The wavelengths that are used under normal operating conditions (i.e., λₓ on the external ring 2 and λ_{y}, on the internal ring 3) to perform working links are identified with a "w" suffix (λ_{x,w}, λ_{y,w}), while the wavelengths which are adapted to be used for protection (i.e., λ_{y} on the external ring 2 and λₓ on the internal ring 3) are identified with a "p" suffix (λ_{x,p}, λ_{y,p}).

The first and the second wavelengths λₓ, λ_{y} can be used on the protection path associated with the corresponding pair of nodes to perform a further bidirectional working link between the first and the second node or to perform further bidirectional working links between other pairs of nodes (which may include one of the previously considered nodes), provided that those further working links do not overlap with each other and with the above considered one. Thus, in general, the pair of wavelengths λₓ, λ_{y} defines a "logical ring", i.e., a virtual ring which may include many non-overlapping working links operating at λ_{x,w}, λ_{y,x} Protection wavelengths λ_{x,p}, λ_{y,p} are not used under normal operating conditions, and are shared among the different working links operating at λ_{x,p} λ_{y,p} (i.e., on the same logical ring). Overlapping working links can only be part of different logical rings and operate at different wavelengths.

The number of working links in a single logic ring depends on the client traffic pattern. For example, with M nodes and N wavelengths (N even), in case of "hub traffic" (i.e., one node communicating with all the other nodes) a maximum of N protected working links can be established because each logical ring can support only two working links, while in case of "uniform traffic" (i.e., each node communicating only with its two adjacent) a maximum of MN/2 protected working links are available because each logical ring (i e., each pair of wavelengths) can support M working links.

In the example of Figure 2, one working link is set up between node 20c and node 20f using the first working wavelength λ_{x,w} on the external ring 2 and the second working wavelength λ_{y,w} on the internal ring 3. Another working link is set up with the same wavelengths (and directions of propagation on the two rings 2, 3) between node 20d and node 20e. In this example, it is also possible to use the same wavelengths to set up a working link between node 20c and node 20d and between node 20e and node 20f, but it is not possible for example to set up a working link between node 20b and node 20e because it will overlap with the ring arcs already used by the previous links.

As will be described more fully, each of nodes 20a-20f provides optical add/drop/bypass functions for each wavelength within the wavelength transmission band on both the external and internal fiber rings 2, 3, together with optical amplification and regeneration (if necessary).

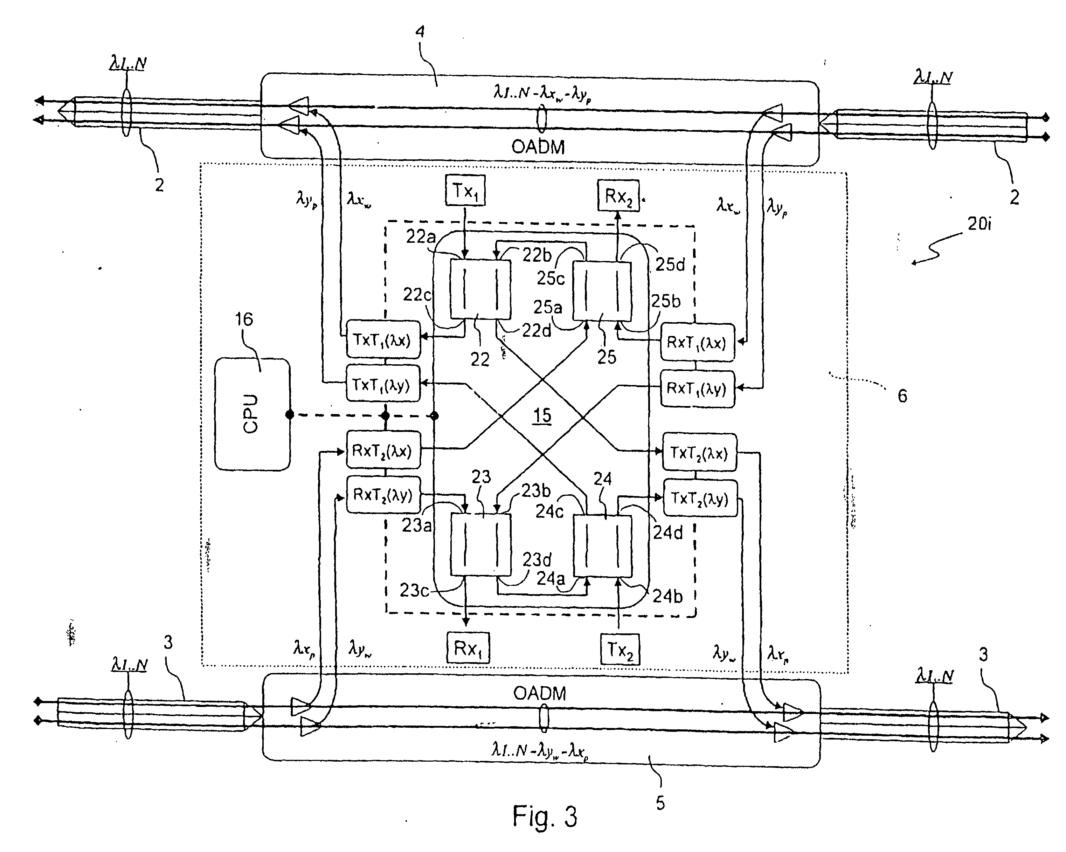

Figure 3 shows the structure of a generic node 20i of network 1, in particular of a node operating at wavelengths λₓ and λ_{y}, Node 20i includes optical add/drop multiplexers (OADM) 4, 5 and a receiving/transmitting module 6. The receiving/transmitting module 6 contains the following components: transmitters Tx₁, Tx₂; receivers Rx₁, Rx₂; transmitting transponders TXT₁(λₓ), TxT₁(λ_{y}), TxT₂(λₓ), TxT₂(λ_{y}); receiving transponders RxT₁(λₓ), RxT₁(λ_{y}), RxT₂(λₓ) RxT₂(λ_{y}); a switch unit 15; and a central processing unit (CPU) 16.

The OADMs 4, 5 have the capability to insert and extract optical signals at the working and protection wavelengths associated with node 20i (i.e., λₓ and λ_{y}) into rings 2, 3, and to bypass the other transmission wavelengths, If required, OADMs 4, 5 may perform other functions within the wavelength transmission band, such as regeneration, performance monitoring, etc. The OADM 4 is coupled to the fiber of the external ring 2 for performing add/drop functions, while OADM 5 performs the add/drop functions on the internal ring 3. OADMs 4 and 5 may be implemented, for example, using the Pirelli Optical Systems OADM/P4-R1 (WaveMux6400 product family).

Transmitters Tx₁, Tx₂ and receivers Rx₁, Rx₂ represent the client access points for the input and the output of information. In particular, transmitters Tx₁, Tx₂ accept the input of information that are addressed to the two receivers that are connected to network 1. The input of information by transmitters Tx₁, Tx₂ may be performed at wavelengths not included in the transmission wavelength band of network l, since the transmitting transponders TxTs provide the signals with the correct wavelength (i.e., with the first wavelength λₓ or the second wavelength λ_{y}). Tx₁, Tx₂ may be, for example, a standard Sonet OC-48/SDH STM-16 terminal (produced for example by Nortel). Different bit rate terminals can be used provided that the transmitting transponders are compatible.

Receivers Rx₁, Rx₂ output information from the two transmitters that are connected to network 1. Receivers Rx₁, Rx₂ may be adapted to receive signals at wavelengths that are not included in the transmission wavelength band of network 1, since receiving transponders RxTs provide the signals from the network 1 with a wavelength adapted for reception receivers Rx₁, Rx₂, Rx₁, Rx₂ may be, for example, a standard Sonet OC-8/SDH STM-16 terminal (produced for example by Nortel). Different bit rate terminals can be used provided that the receiving transponders are compatible.

The transmitting transponders (TxT₁(λₓ), TxT₁(λ_{y}) are optically coupled to the external ring 2 by means of OADM 4 and are adapted to feed signals at wavelengths λₓ and λ_{y}, to the external ring 2; the transmitting transponders (TxT₂(λₓ), TxT₂(λ_{y}) are optically coupled to the internal ring 3 by means of OADM 5 and are adapted to feed signals at wavelengths λₓ and λ_{y}, to the internal ring 3.

Each transmitting transponder (TxT₁(λₓ), TxT₁(λ_{y}), (TxT₂(λ_{y}) TxT₂(λ_{y}) may be of a type that is adapted to receive an optical signal from switch unit 15, to convert the optical signal into electrical format for processing, and to output a new optical signal with a predetermined wavelength within the wavelength band. Transmitting transponders of this type can be implemented, for example, using Pirelli Optical Systems WCM/F-xxx (WaveMux6400 product family, xxx = output wavelength code) transponders. Alternatively, the transmitting transponders may be completely optical devices (for example based on SOAs, Semiconductor Optical Amplifiers) to process information associated with the optical signal; for example managing a pilot tone over-modulating the optical wavelength that carries the signal.

Processing, in this case, includes providing the transmitted signals with information for protection purposes (e.g., channel identifier, performance monitoring, protection protocol) as channel overhead. This information is not part of the client payload and are added to the signal by the transmitting transponders under the supervision of the CPU 16. For example, a Pirelli Optical Systems WCM/F-xxx unit has the capability to add an overhead channel to the client payload to transport the signalling information. A similar technique, but operating at the multiplex section level, is used in the Sonet/SDH protocol at the transmitting side (e.g., channel overhead, multiplex section overhead with B monitor byte and K1/K2 APS bytes).

With respect to the receiving transponder (RxT₁(λₓ, RxT₁(λ_{y}), these receiving transponders (RxT₁(λₓ, RxT₁(λ_{y}) are optically coupled to the external ring 2 by means of the OADM 4 and are adapted to receive signals at wavelength λₓ and λ_{y}. The receiving transponders (RxT₂(λₓ, RxT₂(λ_{y}) are optically coupled to the internal ring 3 by means of the OADM 5 and are adapted to receive signals at wavelength λₓ and λ_{y}. Each receiving transponder (RxT₁(λₓ, RxT₁(λ_{y})(RxT₂(λₓ, RxT₂(λ_{y}) may be of the type adapted to receive an optical signal from rings 2, 3, to convert the optical signal into electrical format for processing, and to output a new optical signal with a predetermined wavelength within the wavelength adapted for reception by a corresponding receiver Rx₁, Rx₂. Receiving transponders can be implemented, for example, using Pirelli Optical Systems RXT-DM/F (WaveMux6400 product family) units. Alternatively, the receiving transponders, like the transmitting transponders, may be completely optical devices (for example based on SOAs, Semiconductor Optical Amplifiers). Processing, in this case, includes extracting from the received signals the information previously inserted as channel overhead by the corresponding TXT at the transmitting node for protection purposes (e.g., channel identifier, performance monitoring, protection protocol). The Pirelli Optical Systems RXT-DM/F unit, for example, is able to extract an overhead channel from the received signal to process the signalling information. A similar technique, but operating at the multiplex section level, is used in the Sonet/SDH protocol at the receiving side (e.g.; channel overhead, multiplex section overhead with B monitor byte and K1/K2 APS bytes).

CPU 16 communicates with the transmitting and receiving transponders TxTs, RxTs to provide or to process the information related to the working links (link signalling), to check the operating conditions of the related working links, and to control switch unit 15 in accordance with the detected operating conditions. Link signaling includes channel identification information, which can be implemented for example either by means of a pilot tone over-modulating the optical wavelength carrying the signal or by using a TDM (Time Division Multiplexing) frame structure including the signal channels together with an extra channel for link signalling transmission. Logical connections between CPU 16 and its controlled units are represented in Figure 3 as dashed lines.

Switch unit 15 is adapted to provide the optical switching facilities to implement the protection layout according to the present invention, by selectively connecting transmitters Txs and receivers Rxs to transmitting transponders TxTs and receiving transponders RxTs. As shown in Figure 3, switch unit 15, in an exemplary embodiment, includes 2x2 optical switch 22-25 that are driven by CPU 16 through appropriate control logic (not shown). Optical switches 22-25 are, for example, 2x2 optomechanical switches (e.g., of the type produced by JDS FITEL, INC., 570 Heston Drive, Nepean, Ontario (CA) or of the type produced by E-TEK DYNAMICS, INC., 1885 Lundy Ave., San Jose, CA (USA)).

Optical switch 22 has an input 22a that is coupled to the transmitter Tx₁. The switch 22 also has an input 22b that is coupled to the output 25c of switch 25. The output 22c of switch 22 is coupled to the transmitting transponder TxT₁(λₓ); the other output 22d of switch 22 is coupled to the transmitting transponder TxT₂(λₓ);

As regards optical switch 23, the input 23a of switch 23 is coupled to the receiving transponder RxT₂(λ_{y}). Switch 23 also has an input 23b that is coupled to the receiving transponder RxT₁(λ_{y}). The outputs 23c and 23d of switch 23 are coupled to the receiver Rx₁ and to the input 24a of switch 24, respectively.

Switch 24 has an input 24a that is coupled to the output 23d of the switch 23, and an input 24b that is coupled to the transmitter Tx₂. The outputs 24c and 24d are coupled to the transmitting transponder TxT₁(λ_{y}) and the transmitting transponder TxT₂(λ_{y}), respectively.

Switch 25 has inputs 25a and 26b that are coupled to the receiving transponder RXT₂(λₓ) and the receiving transponder RxT₁(λₓ), respectively. Switch 25 has an output 25c that is coupled to the input 22b of the switch 22, and an output 25d that is coupled to the receiver Rx2.

Each optical switch 22-25 can operate in a bypass status (typically used under normal conditions), in which the first input is coupled to the first output and the second input is coupled to the second output. In a switched status (typically used in case of failure), each of the optical switches 22-25 has the first input that is coupled to the second output and the second input that is coupled to the first output.

The architecture of Figure 3 is modular and can be applied for each logical ring in which the node acts as a link termination. In other words, node 20i may include a plurality of modules 6, each for managing a different pair of wavelengths. In this case, the wavelengths assigned to each logical ring are separately added/dropped by the two OADMs 4, 5 and processed separately by a corresponding module 6.

It is noted that the functional layout of the node described above can be physically implemented in different ways, for example integrating the CPU 16 or the transponders 6-13 inside the switch unit 15.

Switch unit 15 is over-dimensioned for the switching requirements of node 20i and it defines, in case of failure, some interconnections which are not operatively used. For example, while the receiving transponder RXT₁(λₓ) is connected to the receiver Rx₂ under normal operating conditions, no connection is needed for the receiving transponder RXT₁(λₓ) in case of failure on the external ring 2 on the right-hand side of node 20i (since no signal is received from this side). Taking into consideration this over-dimensioning of the switch unit functionality, it is possible to use, in place of the 2x2 switch type unit, other unit architectures which optimizes the number of interconnections in relation to the functional requirements. The interconnection requirements in node 20i under both normal and failure conditions (i.e., for working and protection) is summarized in the following table:

| | Rx₁ | Rx₂ | TXT₁(λₓ) | TXT₁(λ_{y}) | TXT₂(λₓ) | TXT₂(λ_{y}) |
|---|---|---|---|---|---|---|
| Tx₁ | | | W | | P | |
| Tx₂ | | | | P | | w |
| RXT₁(λₓ) | | W | | | | |
| RXT₁(λ_{y}) | P | | | P | | |
| RTX₂(λₓ) | | P | | | P | |
| RXT₂(λ_{y}) | W | | | | | |
| W=Working P=Protection | | | | | | |

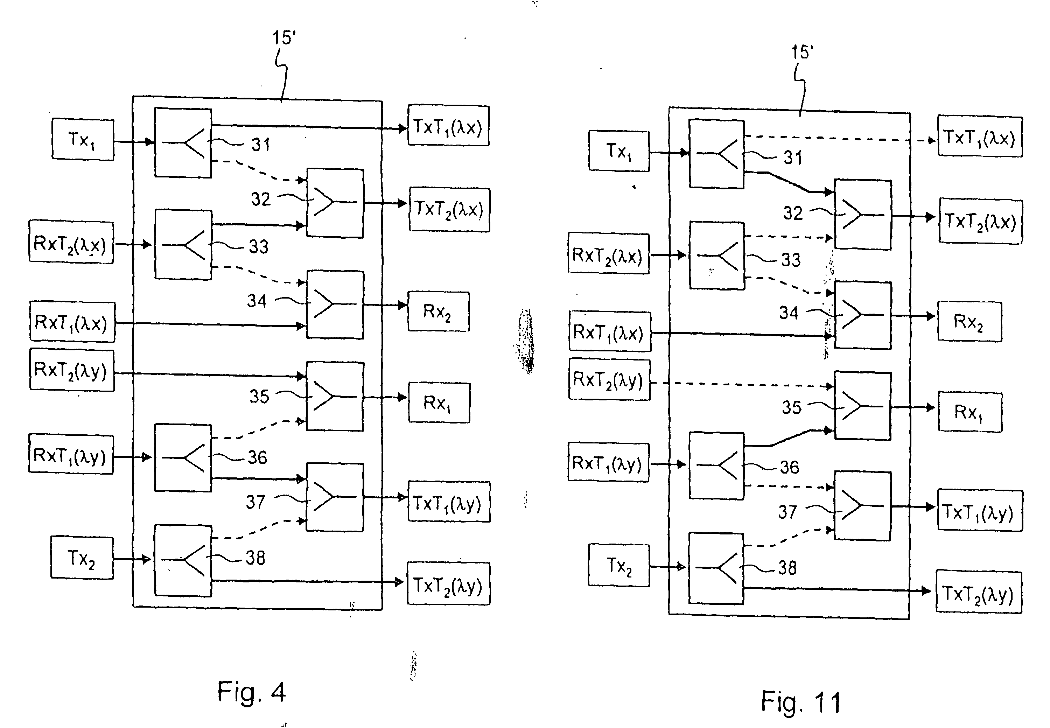

Figure 4 shows a switch unit 15' that includes 1x2 and 2x1 optomechanical switches. It should be noted that connections that are operative under normal conditions are shown with a continuous line, while connections which are not used under normal conditions are represented with a dashed line. Switch unit 15' can used in place of switch unit 15 in the system of Figure 3. Switch unit 15' implements the required interconnection functionality and can be, for example, of the type produced by JDS FITEL, INC., 570 Heston Drive, Nepean, Ontario (CA) or of the type produced by E-TEK DYNAMICS. INC., 1885 Lundy Ave., San Jose, CA (USA). In Figure 4, the input connections and the output connections of switch unit 15' are grouped on the left side and, respectively, on the right side of switch unit 15'.

Switch unit 15' include switches 31, 33, 36, and 38 of the lx2 type and switches 32, 34, 35, and 37 of the 2x1 type. Switch 31 has an input that is coupled to the transmitter Tx₁ and an output that is coupled to the transmitting transponder TxT₁(λ_{y}). Switch 32 of the 2x1 type has an input that is coupled to the output of switch 31 and an output that is coupled to the transmitting transponder TxT₂(λₓ). Switch 33 of the 1x2 type has an input that is coupled to the third receiving transponder RxT₂(λₓ) and an output that is coupled to the input of the switch 32. Switch 34 of the 2x1 type has an input that is coupled to the output of switch 33, as well as another input that is coupled to a receiving transponder RXT₁(λₓ). The output of switch 34 is coupled to the receiver Rx₂, Switch 35 of the 2x1 type has an input that is coupled to the receiving transponder RxT₂(λ_{y}) and an output that is coupled to the receiver Rx₁. Switch 36 of the 1x2 type has an input that is coupled to the receiving transponder RxT₁(λ_{y}) and an output that is coupled to the input of the switch 35. Switch 37 of the 2x1 type has an input that is coupled to the output of switch 36 and an output that is coupled to the transmitting transponder TxT₁(λ_{y}). Switch 38 of the 1x2 type, has an input that is coupled to the transmitter Tx₂ and an output that is coupled to the input of switch 37; the other output of switch 38 is coupled to the transmitting transponder TxT₂(λ_{y}).

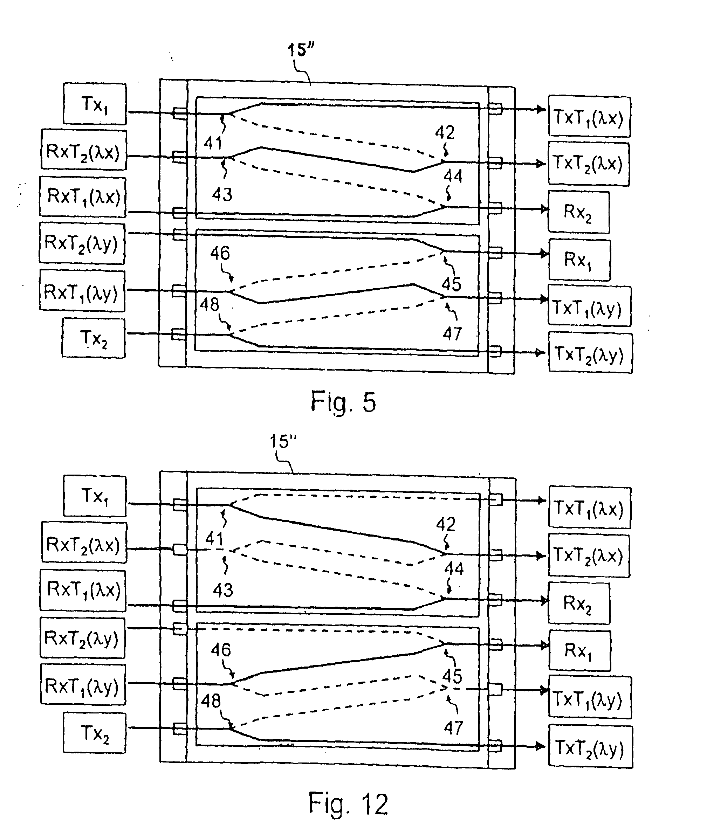

Figure 5 shows another embodiment of the switch unit according to the present invention. Switch unit 15" includes a lithium niobate (LiNbO₃) integrated switching matrix, in which interconnections among input and outputs are similarly configured to the layout of the switch unit 15' of Figure 4. In particular, switch unit 15" includes four 1x2 switches, in which each of the 1x2 switches contains the following components: an input waveguide; a Y-shaped branching waveguide that has one input arm that is connected to input waveguide; and two output waveguides, in which each is connected to the output arms of the branching waveguide. As with Figure 4, the connections which are operative under normal conditions are shown with a continuous line, while connections which are not used under normal condition are represented with a dashed line.

The switch unit 15" also has four 2x1 switches. Each of the four 2x1 switches includes the following components: two input waveguides; a Y-shaped branching waveguide with two input arms that are connected to the input waveguides; and an output waveguide that is connected to the output arm of the branching waveguide. Further, switch unit 15" includes electrodes (not shown) that are formed on the surface of the substrate in correspondence of the Y-shaped branching waveguides and adapted to produce the switching action between the two arms of the Y.

Switch 41 (1x2) has an input waveguide that is coupled to the transmitter Tx₁ and an output waveguide that is coupled to the transmitting transponder TxT₁(λₓ). Switch 42 (2x1) has an input waveguide that is coupled to the output waveguide of switch 41 and an output waveguide that is coupled to the transmitting transponder TxT₂(λₓ). Switch 43 (1x2) has an input waveguide that is coupled to the receiving transponder RXT₂(λₓ) and an output waveguide that is coupled to the input waveguide of switch 42. Switch 44 (2x1) has an input waveguide that is coupled to the output waveguide of switch 43, and another input waveguide that is coupled to the receiving transponder RxT₁(λₓ). The output waveguide of switch 43 is coupled to the receiver Rx₂. Switch 45 (2x1) has an input waveguide that is coupled to the receiving transponder RxT₂(λ_{y}) and an output waveguide that is coupled to the receiver Rx₁. Switch 46 (1x2) has an input waveguide that is coupled to the receiving transponder RxT₁(λ_{y}) and an output waveguide that is coupled to the second input waveguide of the switch 45. Switch 47 (2x1) has an input waveguide that is coupled to the output waveguide of switch 46 and an output waveguide that is coupled to the transmitting transponder TxT₁(λ_{y}). Switch 48 (1x2) has an input waveguide that is coupled to the transmitter Tx₂, an output waveguide that is coupled to the input waveguide of switch 47, and another output waveguide that is coupled to the transmitting transponder TxT₂(λ_{y}).

The use of an integrated switching matrix offers several advantages over a switching matrix that employs discrete components (as with switch units 15 and 15'). In particular, opto-mechanical switch units 15 and 15' require a larger foot print than switch unit 15"; for example, a single 2x2 opto-mechanical switch may occupy a surface of about 48×8 18 mm², in which four switches are needed to form the switch unit 15, while the integrated switch unit 15" may occupy an area of about 4x65 mm². In addition, the integrated switch unit 15" has response times that are lower than opto-mechanical switch units 15 and 15'. In fact, integrated switch unit 15" exhibits response times of about 1 ms, while opto-mechanical switch units 15 and 15' have typical response times of about 5-10 ms. The use of a single integrated device in place of four 2x2 switches or eight 1x2 and 2x1 switches simplifies the piloting electronic circuit. Further, the integrated switch unit 15" is less expensive than opto-mechanical switch units 15 and 15'.

It is recognized that other types of switches can be used beyond those of units 15, 15', and 15". For example, these other switches, which may use a discrete components switching matrix or an integrated switching matrix, may include thermo-optical switches, magneto-optical switches, liquid crystal switches, SOA (Semiconductor Optical Amplifier) switches, electro-optical switches and micro-mechanical switches (MEMS).

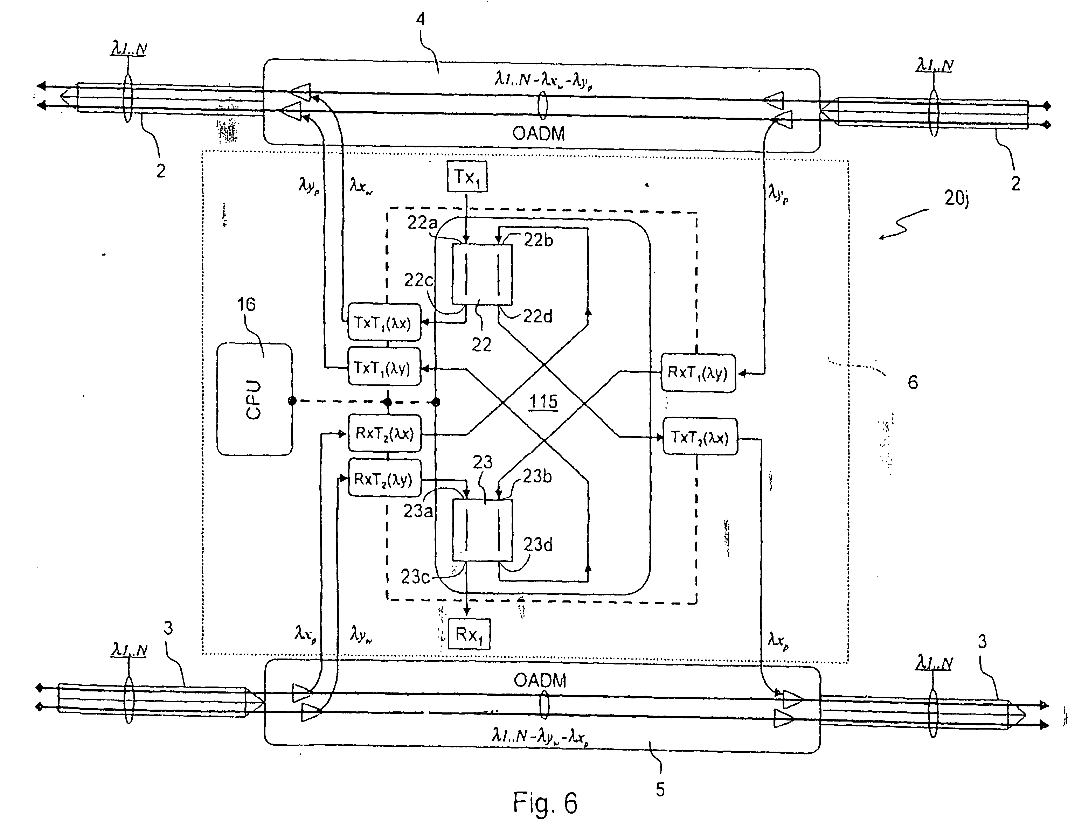

The node structure previously described is adapted to manage two working links on the same logical ring. However, if the client traffic pattern requires only one working link to be terminated at a node, such node can be sub-equipped; that is, fewer components can be utilized. This situation is shown in Figure 6, in which a one-link node 20j is adapted to manage a single working link on the left-hand side, shown under normal operating conditions. Node 20j differs from the node 20i of Figure 3 in that the transmitter Tx₂, the receiver Rx₂, the receiving transponder RXT₁(λₓ) and the transmitting transponder TxT₂(λ_{y}) of node 20i are absent, and in that the node 20j includes a switch unit 115 which does not utilize switches 24, 25 of switch unit 15. In contrast to the architecture of Figure 3, the receiving transponder RXT₂(λₓ) is directly coupled to the input 22b of the switch 22 and the output 23d of switch 23 is directly coupled to the transmitting transponder TxT₁(λ_{y}). The single working link that is managed by node 20j includes signals that are sent by node 20j to another node at the working wavelength λ_{y,w} on the external ring 2 as well as signals that are received by node 20j from the other node at the working wavelength λ_{y,w} on the internal ring 3. Protection wavelengths λ_{x,p} and λ_{y,p} are managed in the same way as previously described with respect to the two-link node.

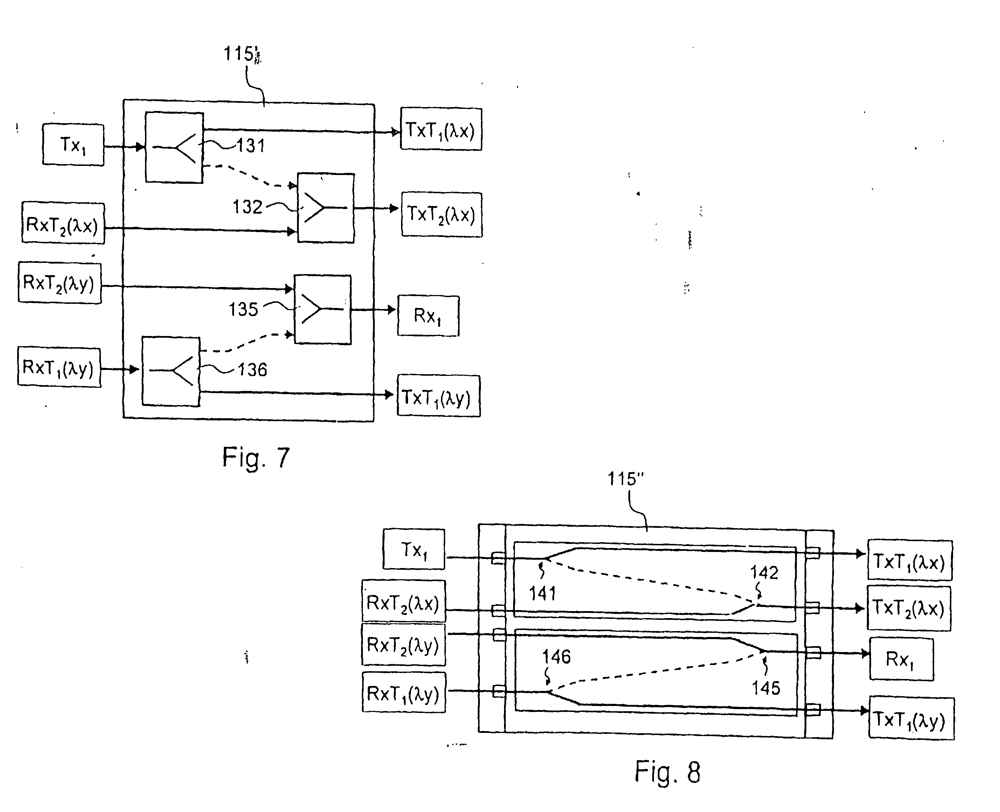

Figure 7 shows an alternative switch unit 115' for a one-link node, which can be used in place of switch unit 115 of Figure 6. Switch unit 115' includes 1x2 and 2x1 optomechanical switches of the same type as those of switch unit 15' and implements the interconnection functionality that is required for node 20j, in which the unused interconnections are omitted. For purposes of explanation, input connections and output connections of switch unit 115' are grouped on the left side and on the right side, respectively, of switch unit 115'. The connections, which are operative under normal conditions, are shown with a continuous line, while connections which are not used under normal conditions arc represented with a dashed line.

Switch unit 115' includes a switch 131 (1x2), a switch 132 (2x1), a switch 135 (2x1), and a switch 136 (1x2), which are equivalent to switches 31, 32, 35 and 36 of switch unit 15' (Figure 4), respectively; however, switch unit 115' differs from switch unit 15' in that switches 33, 34, 37 and 38 of switch unit 15' are absent.

Switch 131 of the 1x2 type has an input that is coupled to the transmitter Tx₁ and an output that is coupled to the transmitting transponder TxT₁(λₓ). Switch 132 of the 2x1 type has an input that is coupled to an output of switch 131, and another input that is coupled to the receiving transponder RXT₂(λₓ). The output of switch 132 is coupled to the third transmitting transponder TxT₂(λₓ). Switch 135 of the 2x1 type has an input that is coupled to the receiving transponder RxT₂(λ_{y}) and an output that is coupled to the receiver Rx₁. Switch 136 of the 1x2 type has an input that is coupled to the receiving transponder RxT₁(λ_{y}), an output that is coupled to the input of switch 135, and another output is coupled to the transmitting transponder TxT₁(λ_{y}).

Figure 8 shows an integrated optics switch unit 115" that has a similar switching architecture of switch unit 115' of Figure 7, but realized using the similar technology of switch unit 15" of Figure 5 (i.e., lithium, niobate (LiNbO₃) integrated circuit technology). Switch unit 115" includes a switch 141 (1x2), a switch 142 (2x1), a switch 145 (2x1); and a switch 146 (1x2), which perform the similar signal routing as the corresponding switches of switch unit 115' (figure 7).

Alternatively, switch units 115, 115' and 115" may include the following types of switch: thermo-optical switches, magneto-optical switches, liquid crystal switches, SOA (Semiconductor Optical Amplifier) switches, electro-optical switches and micro-mechanical switches (MEMS).

Attention is now drawn to the operation of Network 1 (Figure 2). When a link between a first and a second node of the network 1 has to be established, a generic pair of first and second wavelengths λₓ, λ_{y} is chosen within the wavelength band. A working link is then set up between the two nodes by connecting the transmitter Tx₁ of the first node to the receiver Rx₂ of the second node using the first wavelength λₓ on the external ring 2, and by connecting the transmitter Tx₂ of the second node to the receiver Rx₁ of the first node using the second wavelength λ_{y} on the internal ring 3, on the same working arc path. As previously described, other working links may be set up in the protection path of the two nodes, provided that the working path used by each working link is non-overlapping with other working paths that are used by other working links using the same wavelengths. In this example, the second wavelength λ_{y} on the external ring 2 and the first wavelength λₓ on the internal ring 3 are not used under normal operating conditions, but are reserved for optical protection (i.e., are reserved for use in case of failure).

Each working link is controlled by the associated two terminating nodes. For a working link that operates at working wavelengths λ_{y,w}, λ_{y,w}, the two nodes at the end of the link provide the add/drop functions on working wavelengths λ_{x,w} and λ_{y,w} to/from the set of transmission wavelengths λ₁, ..., λ_{N}. Moreover, all the required monitoring functions on the transmitted signals (e.g., optical power level, channel identifier, BER performance, etc.) are performed at these terminating nodes. It is noted that the nodes that are not involved in processing signals at these working wavelengths λ_{x,w} and λ_{y,w} simply bypass the signals. Each node at the end of a working link using wavelengths λ_{x,p} and λ_{y,p} also control the protection wavelengths λ_{wx,wp} and λ_{y,p}; these protection wavelengths are utilized by all the working links of the corresponding logical ring. The other nodes (i.e., the nodes external to this logical ring) do not perform any operation on λ_{w,p} and λ_{y,p} as these wavelengths are simply bypassed through these nodes. Basically, the nodes that are not included in a logical ring (i.e., nodes that do not terminate a working link on a particular logical ring) can be completely transparent to the wavelengths associated with the logical ring.

In the example of Figure 2, the working hnk between node 20c and node 20f that utilize working wavelengths λ_{x,w} and λ_{y,w} is under control of these two nodes 20c and 20f. Likewise, the working link between nodes 20d and 20e; which use the same wavelengths, is under control of nodes 20d and 20e. Each of the nodes 20c, 20d, 20e, and 20f also control the protection wavelengths λₓₚ and λ_{y,p} associated with the corresponding logical ring to have access to the shared protection resource.

It is noted that nodes 20a and 20b cannot be part of the logical ring operating at working wavelengths λ_{x,w}, λ_{y,w} but these nodes 20a and 20b may serve as termination nodes of working links at wavelengths different from λ_{x,w}, λ_{y,w} Accordingly, nodes 20a and 20b do not perform any action on working wavelengths λ_{x,w}, λ_{y,w} and protection wavelengths λ_{x,p}, λ_{y,p}; however, these nodes 20a and 20b may provide optical amplification on the set of transmission wavelengths λ₁, ..., λ_{N}. Furthermore, each of the nodes 20a and 20b may be required to provide functions like regeneration or monitoring on the bypassed wavelengths, in order to allow a constant performance control of the set of transmission wavelengths λ₁, λ₂, ..., λ_{N} over the entire ring network. Under failure conditions, these nodes 20a and 20b need not provide any reconfiguration of the channels that are carried by the bypassed wavelengths.

With reference to Figure 3, the signal flow inside the node 20i, under normal operating conditions, is now described. Upon reception of the optical signals, the OADM 4, 5 drop the wavelengths associated with the logical rings. All the other wavelengths may be directly bypassed to the node output without any processing. OADM 4 drops from the set of transmission wavelengths λ₁, ..., λ_{N} on the external ring 2 both the working and protection wavelengths λ_{x,w}, λ_{y,p}, (and possibly working and protection wavelengths of other logical rings to be managed), while OADM 5 drops from the set of transmission wavelengths λ₁, ..., λ_{N} on the internal ring 3 both the working and protection wavelengths λ_{x,w}, λ_{y,p}, λ_{y,w} (and possibly working and protection wavelengths of other logical rings). Wavelengths λ_{x,w} λ_{y,p} λ_{y,w} and λ_{x,p} are sent directly to the respective receiving transponders RXT₁(λₓ), RxT₁(λ_{y}), RXT₂(λ_{y}) and RXT₂(λₓ), in which, after electrical conversion, information related to the link (link signalling) is extracted and sent to the CPU 16 for processing. After processing, wavelengthsλ_{x,w}, λ_{y,p}, λ_{y,w} and λ_{x,p} are converted back to optical signals with a new optical format.

The working wavelength λ_{y,p} is then routed through switch unit 15 to the receiver Rx₁, and the working wavelength λ_{x,w} is routed through switch unit 15 to the receiver Rx₂. The protection wavelengths λ_{x,p} and λ_{y,p} are by passed through switch unit 15 to the transmitting transponder TXT₂(λₓ) and to the transmitting transponder TxT₁(λ_{y}), respectively, from where they are fed to the internal ring 3 and to the external ring 2 by the respective OADM 5 and OADM 4. Signalling information that is carried by the protection wavelengths is left unchanged, because the protection scheme has not been evoked on the two working channels.

Signals that are generated by the transmitter Tx₁ are routed through switch unit 15 to the transmitting transponder TxT₁(λₓ) for transmission on the working wavelength λ_{x,w}. The signals that generated by the transmitter Tx₂ are routed through switch unit 15 to the transmitting transponder TxT₂(λ_{y}) for transmission on the working wavelength λ_{y,w}. Within the transmitting transponders TXT₁(λₓ), TxT₂(λ₁), appropriate information (link signalling, channel identifier) that is generated by CPU 16 is added (for example by using bytes k1 and k2 as recommended in the ITU-T standard) to signals on the working wavelength λ_{x,w} and the working wavelength λ_{y,w} respectively. These wavelengths are then sent to the external and internal rings 2, 3 by OADMs 4, 5, respectively.

Identical operations are performed in each receiving/transmitting module that is included in node 20i, for corresponding pairs of wavelengths that have to be managed by this node.

When a failure occurs, reconfiguration takes place in all the logical rings, including at least the working link whose transmission is affected by the failure. As earlier defined, failure is any event or condition that affects the transmission of signals between two node; such events or conditions may be a fiber cut, or equipment malfunction (e.g., OADM or transponder malfunction). Reconfiguration is performed independently for each logical ring. In particular, for each working link that is affected by the failure, reconfiguration takes place only at the pair of nodes that terminate the link, while the nodes that are interposed between these terminating nodes do not perform any action to restore the failed link.

As a consequence of a failure on a working link, which operate at the working wavelengths λ_{x,w}, λ_{y,w}, the associated terminating two nodes detect the failure condition (as will be more fully described below) and run the reconfiguration process by switching the transmission on the respective protection arc path, using the protection wavelengths λ_{x,p}, λ_{y,p}. That is, signals that are previously transmitted at the working wavelength λ_{x,w} on the external ring 2 are switched at the protection wavelength λ_{x,p} on the internal ring 3, while signals previously transmitted at the working wavelength λ_{y,w} on the internal ring 3 are switched at the protection wavelength λ_{y,p} on the external ring 2.

The working link between the two nodes is consequently re-routed on the respective protection path by using the protection wavelengths λ_{x,p}, λ_{y,p}, even through other nodes which are terminating other working links on the same logical ring. These other nodes do not perform any action resulting from the reconfiguration process, as performed by the nodes terminating the failed working link, but must be aware of the presence of a signal carried by the protection wavelengths in order to know that the protection scheme has been invoked by another working link of the same logical ring. Therefore, as a consequence of the protection operations being performed on the failed working link, all the other working links of the same logical ring become unprotected. This situation persists until the failure has been repaired and the transmission previously switched on the protection path has been restored on the original working link. In other words, nodes that terminate working links sharing the same protection resource of the failed one (i.e., the working links of the same logical ring) must have the protection mechanism inhibited until normal conditions are restored.

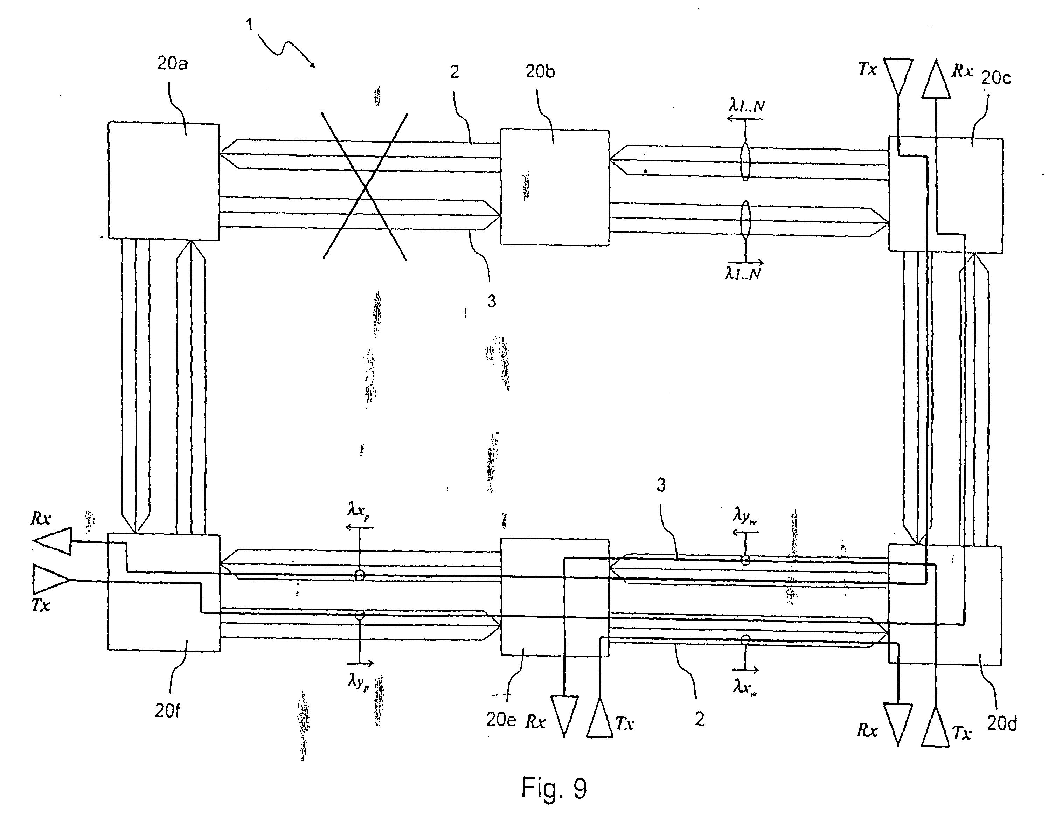

Figure 9 shows a situation in which a failure occurs in the ring network of Figure 2 between nodes 20a and 20b. In such a case, nodes 20a and 20b do not perform any activity in response to the failure; because, under this scenario, these nodes 20a and 20b are not terminating nodes of a working link that is affected by the failure.

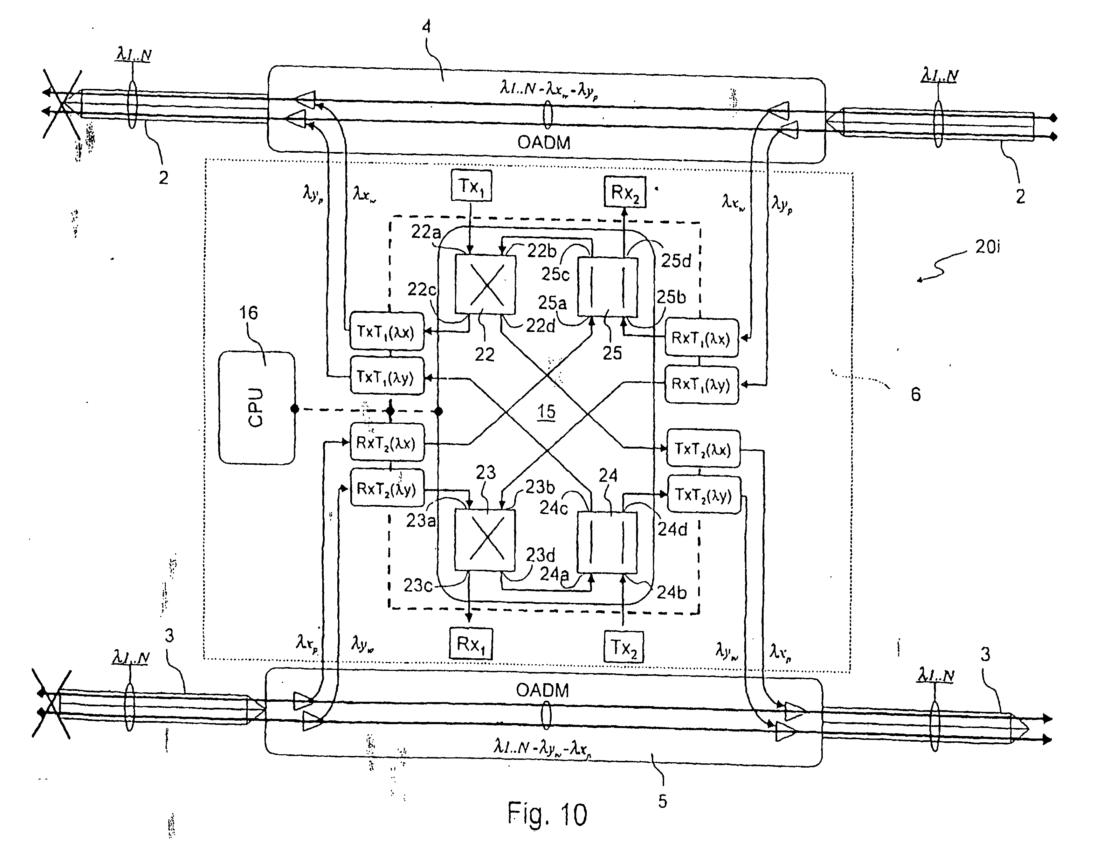

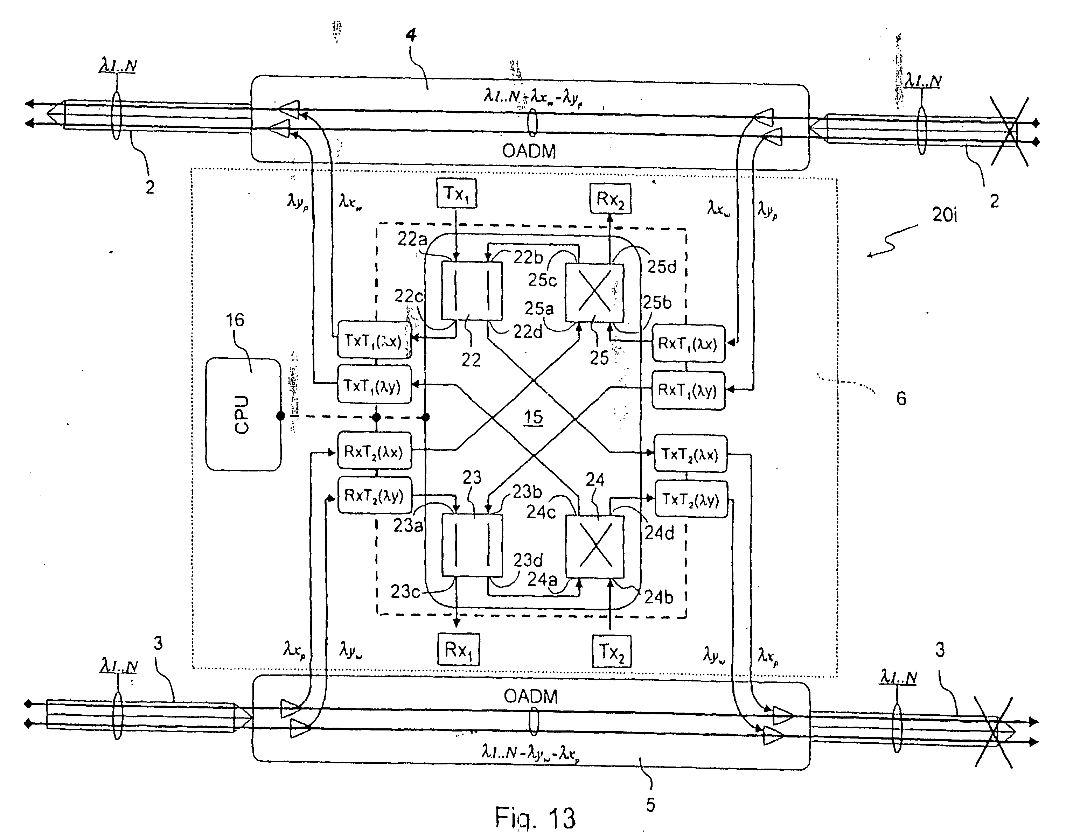

An exemplary sequence of operations that is performed by nodes 20c and 20f for failure detection and corresponding signalling is now described. It is recognized that different sequences of operations may alternatively be used, without departing from the scope of the present invention; all leading to a transitory condition at the end of which nodes 20c and 20f are both reconfigured. Assuming that the failure affects only the transmission from node 20f to node 20c (along the internal ring 3), while the opposite transmission (along the external ring 2) is still operative, node 20c detects the absence of signals or a signal quality degradation (corresponding, for example, to a BER over a predetermined threshold) at the working wavelength λ_{y,w} on the receiving transponder RxT₂(λ_{y}). Consequently, CPU 16 of node 20c executes instruction to reconfigure switch unit 15 (as hereinbelow described with reference to Figure 10) in order to switch the transmission (in the manner described below) on the protection path. Before reconfiguration takes place, node 20c sends node 20f a failure message, preferably along both the external ring 2 (in the counter-clockwise direction) and the internal ring 3 (in the clockwise direction) using the protection wavelengths λ_{y,p} and λ_{y,p}, to inform node 20f of the condition. In the preferred case of the bidirectional message transmission, node 20f receives the message from both the external ring 2 and the internal ring 3 (for example at the protection wavelengths λ_{x,p} and λ_{x,p}); in response to the message, node 20f performs the reconfiguration of switch unit 15 (as shown in Figure 13) to switch the transmission onto the protection path.

If the failure affects only the transmission from node 20c to node 20f (along the external ring 2), a similar sequence of operations is performed. In this case, however, node 20f detects the failure. Under a scenario in which both the transmission directions are affected by the failure, the first node as between nodes 20c and 20f that detects the absence of signals or of a signal quality degradation sends the other node the failure message (preferably along both the external ring 2 and the internal ring 3 by using the protection wavelengths λ_{y,p} and λ_{y,p}) This first node subsequently operates a reconfiguration of its switch unit 15. The other node is alerted to the presence of a failure in the considered link by detecting the failure itself or by receiving the failure message from the first node (and only from one direction, in the preferred case of the bidirectional message transmission). In response, this other node sends a failure message back to the first node and operates to initiate a reconfiguration of its switch unit 15.

After the reconfiguration time, the signals that are transmitted between nodes 20c and 20f are carried on the respective protection path. Nodes 20d and 20e, which, in the example of Figure 2, are the termination nodes of another working link in the same logical ring, are informed of the changed condition by checking the status of the channel that is carried by the protection wavelengths (i.e., by reading the failure message); consequently, these nodes 20d and 20e inhibit their protection mechanism.

When the failure is repaired, the normal condition is restored on each affected logical ring by resetting the switching layouts at the terminating nodes of the failed working links so as to re-route such links onto their original working path. On the logical ring, all the link terminating nodes that are not previously affected by the failure are informed of the release of the shared protection capacity by checking the status of the channel carried by the protection wavelengths (which are now unused). As a consequence, the protection mechanism of these link terminating nodes are no longer inhibited.

Figure 10 shows the situation in which a failure occurs on a working link, which is defined by node 20i (together with a further node not shown); that is, a failure on the left-hand side of node 20i. Node 20i is informed of the failure condition by detecting, at the receiving transponder RxT₂(λ_{y}), the absence of signals, or a signal quality degradation (like a BER over a predetermined threshold), or by receiving a failure message (as previously described). CPU 16 consequently generates an appropriate failure message to be sent to the other terminating node of the working link, preferably along both the external ring 2 and the internal ring 3. CPU 16 preferably sends this failure message to the transmitting transponder TxT₁(λ_{y}) for transmission at the protection wavelength λ_{y,p} and to the transmitting transponder TxT₂(λₓ) for transmission at the protection wavelengths λ_{x,p}, CPU 16 subsequently initiates reconfiguration of switch unit 15, reconfiguring switches 22 and 23 from the bypass status to the switched status in order to avoid the failed working path by re-routing the transmission onto the protection path.

In the new node configuration, the transmitter Tx₁ is connected to the transmitting transponder TXT₂(λₓ), and the corresponding signals are then sent on the internal ring 3 in the clockwise direction. The receiver Rx₁ is connected to the receiving transponder RxT₁(λ_{y}). The signals are then received from the external ring 2 in counter-clockwise direction. If the affected node includes a switch unit 15' (1x2 and 2x1 switches) or a switch unit 15" (integrated optics) in place of switch unit 15 (2x2 switches), the reconfigured status of the corresponding switch unit is as shown in Figure 11 and in Figure 12, respectively.

The node at the other end of the affected link performs the same operations, after receiving a failure message from the other node, or after detecting the absence of signals or a signal quality degradation at the receiving transponder RxT₁(λₓ). The working link between the two nodes is consequently re-routed to the protection path associated with the working link. Both the reconfigured nodes also update the signalling information (generated by the respective CPUs and added to the transmitted signals in the respective transmitting transponders TxTs) that is carried by the protection wavelengths λ_{x,p}, λ_{y,p} in order to inform all the other nodes on the same logical ring that the shared resource is at present used by the two affected nodes. Upon repairing the failure, both the nodes of the affected link can be restored to the normal operative condition of Figure 3, thus releasing the shared protection resource.

In the case in which the nodes have more than one receiving/transmitting module 6, the described protection mechanism operates independently for each module 6.

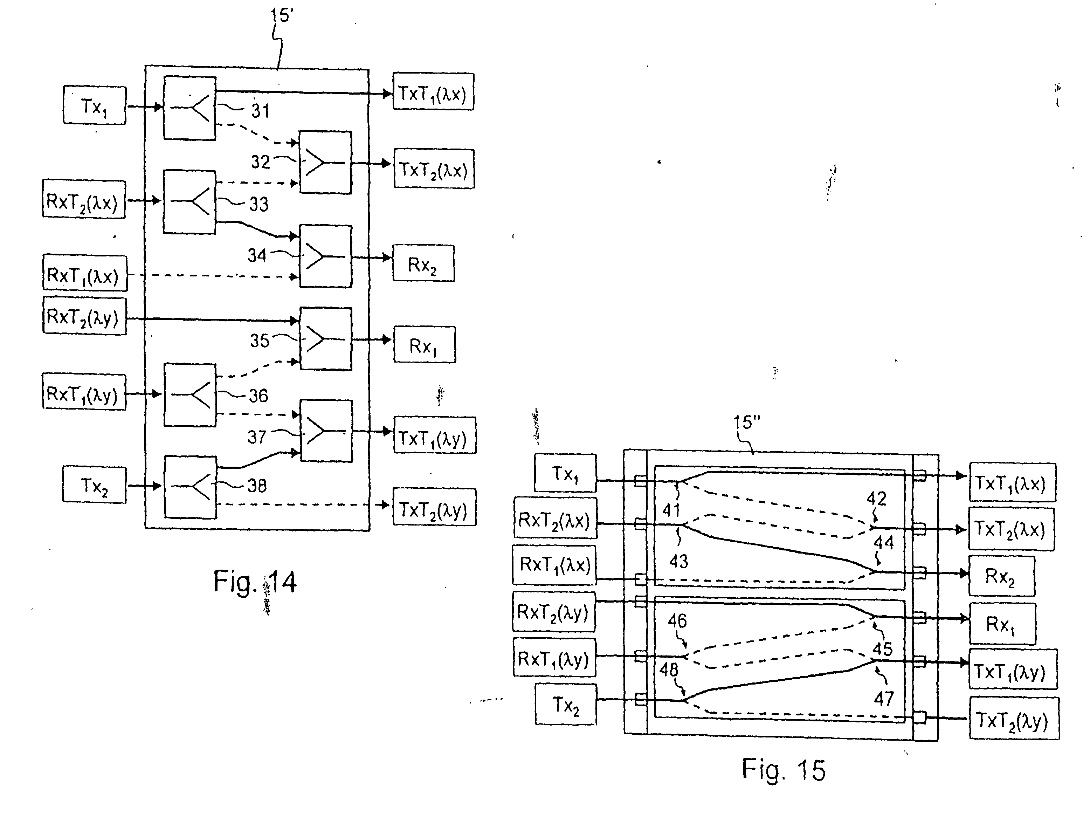

Figures 13-15 show the situation in which a failure occurs on the right-hand side of the node 20i. The reconfiguration process is similar to that of the left-hand side failure, and thus, is not further described.

It is intended that, without depart from the scope of the present invention, the architecture of the nodes may be arranged so that, in the absence of failures, protection wavelengths λ_{x,p} on the internal ring 3 and λ_{y,p} on the external ring 2 may be used to transport low-priority traffic in the same direction as the other wavelengths on 5 the same ring.

Obviously, numerous modifications and variations of the present invention are possible in light of the above teachings. It is therefore to be understood that within the scope of the appended claims, the invention may be practiced otherwise than as specifically described herein.

## Claims

1. An autoprotected optical communication system, comprising:
a first optical carrier (2) configured to transport optical signals in a first direction;
a second optical carrier (3) configured to transport optical signals in a second direction that is opposite to the first direction; and
a plurality of nodes (20a-20f) connected along the first optical carrier (2) and the second optical carrier (3) to form bidirectional links, the plurality of nodes (20a-20f) communicating in pairs, one of the pairs defining a working link associated with a portion of the first optical carrier (2) and a portion of the second optical carrier (3) and being configured to exchange optical signals using a first wavelength (λₓ) on the first optical carrier (2) and a second wavelength (λ_{y}) that is different from the first wavelength (λₓ) on the second optical carrier (3) during a normal condition, the one pair of nodes (20a-20f) being configured to exchange optical signals using the first wavelength (λₓ) on the second optical carrier (3) and the second wavelength (λ_{y}) on the first optical carrier (2) during a failure condition, whereby the first and second wavelengths (λₓ, λ_{y}) are selected from a set of at least three wavelengths (λ₁, λ₂, ...λ_{N}),
**characterised in that** the nodes, (20a-20f) are configured such that a response to a failure condition is executed on a wavelength level to re-route an affected wavelength, among the first and second wavelengths (λₓ, λ_{y}) while maintaining communication across the bi-directional links between nodes for unaffected wavelengths among the set of at least three wavelengths (λ₁, λ₂, ..., λ_{N}).

2. The system of claim 1, wherein each of the plurality of nodes (20a-20f) selectively uses a predetermined subset of wavelengths within a set of transmission wavelengths (λ₁, λ₂, ..., λ_{N}), each of the plurality of nodes (20a-20f) comprising:
a plurality of optical add/drop multiplexers (4, 5) serially connected to the first optical carrier (2) and the second optical carrier (3), respectively, each of the optical add/drop multiplexers (4, 5) configured to selectively perform at least one of adding the subset of wavelengths to the first optical carrier (2) and to the second optical carrier (3), dropping the subset of wavelengths from the first optical carrier (2) and the second optical carrier (3), and bypassing remaining wavelengths of the set of transmission wavelengths (λ₁,λ₂, ...,λ_{N}).

3. The system of claim 1, wherein each of the plurality of nodes (20a-20f) comprises:
an optical transmitter (Tx₁);
an optical receiver (Rx₁); and
a reconfigurable optical switch unit (15, 15', 15", 115', 115") selectively coupling the optical transmitter (Tx₁) and the receiver (Rx₁) to the first optical carrier (2) and the second optical carrier (3).

4. The system of claim 3, wherein each of the plurality of nodes (20a-20f) comprises:
a plurality of infonnation insertion devices (TxTs) optically coupled to the optical transmitter (Tx₁) and configured to insert signalling information into the optical signals; and
a plurality of information extraction devices (RxTs) optically coupled to the optical receiver (Rx₁) and configured to extract signalling information from the optical signals.

5. The system of claim 4, wherein the plurality of information insertion devices (TxTs) and the plurality of information extraction devices (RxTs) include optical transponders (TxT₁(λₓ), TxT₁(λ_{y}), TxT₂(λₓ,) TxT₂(λ_{y}), RXT₁(λₓ), RXT₁(λ_{y}), RXT₂(λₓ), RXT₂(λy)) optically coupling the optical switch unit (15, 15', 15", 115', 115") to the first optical carrier (2) and the second optical carrier (3), the optical transponders (TxT₁(λₓ), TxT₁(λ_{y}), TxT₂(λₓ), TxT₂(λ_{y}), RXT₁(λₓ), RXT₁(λ_{y}), RXT₂(λₓ), RXT₂(λy)) being configured to change wavelengths of the optical signals.

6. A method of providing autoprotection in an optical ring network that includes a first optical carrier (2), and a second optical carrier (3), and a plurality of nodes (20a-20f) connected along the first optical carrier (2) and the second optical carrier (3) and configured to communicate in pairs to define bidirectional links, the method comprising:
exchanging optical signals between one of the pairs of nodes (20a-20f) over one of the bidirectional links by using a first wavelength (λₓ) on the first optical carrier (2) and a second wavelength (λ_{y}) on the second optical carrier (3) during normal operation; whereby the first and second wavelengths (λₓ, λ_{y}) are selected from a set of at least three wavelengths (λ₁, λ₂, ...λ_{N}),
detecting a wavelength failure on the bidirectional links; and
reconfiguring the nodes (20a-20f) in the one pair to invoke a protection scheme that uses the first wavelength (λₓ) on the second optical carrier (3) and the second wavelength (λ_{y}) on the first optical carrier (2) to avoid the wavelength failure,
**characterised in that** a response to a failure condition is executed on a wavelength level to re-route an affected wavelength, among the first and second wavelengths (λₓ, λ_{y}) while maintaining communication across the bidirectional link between nodes (20a-20f) for unaffected wavelengths among the set of at least three wavelengths (λ₁, λ₂, ..., λ_{N}).

7. The method of claim 6, further comprising:
using a predetermined subset of wavelengths within a set of transmission wavelengths (λ₁, λ₂, ..., λ_{N}) carried by the first optical carrier (2) and the second optical carrier (3), wherein the step of exchanging includes optically separating, at each node of the plurality of nodes (20a-20f), each wavelength of the subset of wavelengths from the set of transmission wavelengths (λ₁,λ₂, ...,λ_{N}).

8. The method according to claim 6, wherein the step of detecting comprises:
verifying, in each of the plurality of nodes (20a-20f) and for each wavelength in the set of wavelengths (λ₁, λ₂, ..., λ_{N}), whether the optical signals are received.

9. The method according to claim 6, wherein the step of detecting comprises:
verifying, in each of the plurality of nodes (20a-20f) and for each wavelength in the set of wavelengths (λ₁, λ₂, ..., λ_{N}), whether the optical signals are degraded.

10. The method according to claim 6, wherein the step of detecting comprises:
verifying, in each of the plurality of nodes (20a-20f) and for each wavelength in the set of wavelengths (λ₁,λ₂, ..., λ_{N}), whether the optical signals include a failure message.

11. The method of claim 6, further comprising:
transmitting a failure message between the nodes (20a-20f) in the one pair based upon at least one of non-receipt of the optical signals and receipt of the optical signals that are degraded.

12. The method according to claim 6, wherein the step of reconfiguring comprises:
switching optical connections which selectively couple an optical transmitter (Tx₁) and an optical receiver (Rx₁) to the first optical carrier (2) and the second optical carrier (3).

13. A reconfigurable node of an autoprotected optical communication ring network having a first optical carrier (2) and a second optical carrier (3), comprising:
an optical transmitter (Tx₁) configured to generate optical signals;
an optical receiver (Rx₁) configured to receive optical signals;
a plurality of transmitting transponders (TxT₁(λₓ), TxT₁(λ_{y}), TxT₂(λₓ), TxT₂(λ_{y})) optically coupled to the first optical carrier (2) and the second optical carrier (3);
a plurality of receiving transponders (RXT₁(λₓ), RXT₁(λ_{y}), RXT₂(λₓ), RXT₂(λ_{y})) optically coupled to the first optical carrier (2) and the second optical carrier (3); and
an optical switch unit that includes a plurality of optical switches (22-25) coupled to the transmitting transponders (TxT₁(λₓ), TxT₁(λ_{y}), TxT₂(λₓ), TxT₂(λ_{y})) and the receiving transponders (RXT₁(λₓ), RXT₁(λ_{y}), RXT₂(λₓ). RXT₂(λ_{y})), one of the optical switches (22-25) being coupled to the optical transmitter (Tx₁), another one of the optical switches (22-25) being coupled to the optical receiver (Rx₁);
wherein the optical switches (22-25) are configured to operate selectively under a normal operating condition and under a failure condition, the transponders (TxT₁(λₓ), TxT₁(λ_{y}), TxT₂(λₓ), RXT₁(λ_{y}), RXT₂(λₓ), RXT₂(λ_{y})) using a first wavelength (λₓ) on the first optical carrier (2) and a second wavelength (λ_{y}) that is different from the first wavelength (λₓ) on the second optical carrier (3) during the normal condition, the transponders (TxT₁(λₓ), TxT₁(λ_{y}), TxT₂(λₓ), RXT₁(λ_{y}), RXT₂(λₓ), RXT₂(λ_{y}) using the first wavelength (λₓ) on the second optical carrier (3) and the second wavelength (λ_{y}) on the first optical carrier (2) during the failure condition, whereby the first and second wavelengths (λₓ, λ_{y}) are selected from a set of at least three wavelengths (λ₁, λ₂, ...λ_{N}),
**characterised in that** the optical switches (22-25) are configured such that response to a failure condition is executed on a wavelength level to re-route an affected wavelength among the first and second wavelengths (λₓ, λ_{y}) while maintaining communication across the first and second optical carriers (2, 3) for unaffected wavelengths among the set of at least three wavelengths (λ₁, λ₂, ..., λ_{N}).

14. The node according to claim 13, wherein the plurality of transmitting transponders (TxT₁(λₓ), TxT₁(λ_{y}), TxT₂(λₓ) include a first transmitting transponder (TxT₁(λₓ)) optically coupled to the first optical carrier (2) and configured to modulate a signal at the first wavelength (λₓ), a second transmitting transponder (TxT₁(λ_{y})) optically coupled to the first optical carrier (2) and configured to modulate a signal at a second wavelength (λ_{y}), and a third transmitting transponder (TxT₂(λₓ)) optically coupled to a second optical carrier (3) and configured to modulate a signal at the first wavelength (λₓ), the plurality of receiving transponders (RXT₁(λ_{y}), RXT₂(λₓ), RXT₂(λ_{y})) including a first receiving transponder (RXT₂(λₓ)) optically coupled to the first optical carrier (2) and configured to demodulate a signal having the first wavelength (λₓ), a second receiving transponder (RxT₂(λ_{y})) optically coupled to the first optical carrier (2) and configured to demodulate a signal having the second wavelength (λ_{y}), a third receiving transponder (RxT₁(λ_{y})) optically coupled to the second optical carrier (3) and configured to demodulate a signal having the second wavelength (λ_{y});
wherein, under the normal condition, the optical switches (22-25) are configured to connect the optical transmitter (Tx₁) to the first transmitting transponder (TxT₁(λₓ) and to the third transmitting transponder (TxT₂(λₓ)), to connect the first receiving transponder (RXT₂(λₓ)) to the third transmitting transponder (TxT₂(λₓ)), to connect the second receiving transponder (RxT₂(λ_{y})) to the optical receiver (Rx₁), and to connect the third receiving transponder (RxT₁(λ_{y})) to the optical receiver (Rx₁) and to the second transmitting transponder (TxT₁(λ_{y})).

15. The node according to claim 14, further comprising:
another optical transmitter (Tx₂) configured to generate an optical signal that includes information to be transmitted in the network; and
another optical receiver (Rx₂) configured to receive an optical signal that includes information that has been transmitted in the network;
wherein the plurality of transmitting transponders (TxT₁(λₓ), TxT₁(λ_{y}), TxT₂(λₓ) includes a fourth transmitting transponder (TxT₂(λ_{y})) optically coupled to the second optical carrier (3) and configured to modulate a signal at the second wavelength (λ_{y}), the plurality of receiving transponders including (RXT₁(λ_{y}), RXT₂(λₓ), RXT₂(λ_{y})) a fourth receiving transponder (RXT₁(λₓ)) optically coupled to the first optical carrier (2) and configured to demodulate a signal having the first wavelength (λₓ), during normal condition, the optical switches (22-25) being configured to connect the first receiving transponder (RXT₂(λₓ)) to the third transmitting transponder (TXT₂(λₓ) and to the other receiver (Rx₂), to connect the fourth receiving transponder (RxT₁(λₓ)) to the other receiver (Rx₂), and to connect the other optical transmitter (Tx₂) to the second transmitting transponder (TxT₁(λ_{y})) and to the fourth transmitting transponder (TxT₂(λ_{y})).

16. The node according to claim 14, wherein the first wavelength (λₓ) and the second wavelength (λ_{y}) are selected from a set of transmission wavelengths (λ₁, λ₂, ... ,λ_{N}), the node further comprising:
a plurality of optical add/drop multiplexers (4, 5) configured to optically couple the transmitting transponders (TxT₁(λₓ), TxT₁(λ_{y}), TxT₂(λₓ) and the receiving transponders (RXT₁(λ_{y}), RXT₂(λₓ), RXT₂(λ_{y})) to the first optical carrier (2) and the second optical carrier (3) to feed and extract a subset of wavelengths from the optical carriers (2, 3), and to bypass remaining wavelengths of the set of transmission wavelengths (λ₁, λ₂, ..., λ_{N}).

17. The node according to claim 14, wherein the optical switches (22-25) include 2x2 switches.

18. The node according to claim 14, wherein the optical switches (22-25) include 1×2 and 2×1 switches.

19. The node according to claim 17, wherein the optical switches (22-25) include discrete switching components.

20. The node according to claim 17, wherein the optical switches (22-25) include an integrated switching matrix.

21. The node according to claim 19, wherein the optical switches (22-25) include at least one of opto-mechanical switches, thermo-optical switches, magneto-optical switches, liquid crystal switches, semiconductor switches, electro-optical switches, micro-mechanical switches, and lithium niobate integrated circuit switches.

## Patentansprüche

1. Selbstschützendes optisches Kommunikationssystem, umfassend:
einen ersten optischen Träger (2), der dafür ausgelegt ist, optische Signale in einer ersten Richtung zu transportieren;
einen zweiten optischen Träger (3), der dafür ausgelegt ist, optische Signale in einer zu der ersten Richtung entgegengesetzten zweiten Richtung zu transportieren; und
eine Mehrzahl von Knoten (20a bis 20f), die entlang des ersten optischen Trägers (2) und des zweiten optischen Trägers (3) verbunden sind, um bidirektionale Strekkenabschnitte zu bilden, wobei die Mehrzahl der Knoten (20a bis 20f) paarweise miteinander in Verbindung steht, wobei eines der Paare einen Arbeitsstreckenabschnitt festgelegt, der einem Abschnitt des ersten optischen Trägers (2) und einem Abschnitt des zweiten optischen Trägers (3) zugeordnet und dafür ausgelegt ist, in einem Normalzustand optische Signale unter Verwendung einer ersten Wellenlänge (λₓ) auf dem ersten optischen Träger (2) und einer von der ersten Wellenlänge (λₓ) verschiedenen zweiten Wellenlänge (λ_{y}) auf dem zweiten optischen Träger (3) auszutauschen, wobei das eine Paar der Knoten (20a bis 20f) dafür ausgelegt ist, in einem Fehlerzustand optische Signale unter Verwendung der ersten Wellenlänge (λₓ) auf dem zweiten optischen Träger (3) und der zweiten Wellenlänge (λ_{y}) auf dem ersten optischen Träger (2) auszutauschen, wobei die ersten und zweiten Wellenlängen (λₓ, λ_{y}) aus einer Menge von wenigstens drei Wellenlängen (λ₁, λ₂, ..., λ_{N}) ausgewählt sind,
**dadurch gekennzeichnet, dass** die Knoten (20a bis 20f) dafür ausgelegt sind, dass eine Reaktion auf einen Fehlerzustand auf einem Wellenlängenniveau ausgeführt wird, um eine betroffene Wellenlänge unter den ersten und zweiten Wellenlängen (λₓ, λ_{y}) umzuleiten, während die Kommunikation entlang der bidirektionalen Strekkenabschnitte zwischen den Knoten für nichtbetroffene Wellenlängen aus der Menge von wenigstens drei Wellenlängen (λ₁, λ₂, .... λ_{N}) aufrechterhalten wird.

2. System nach Anspruch 1, bei dem jeder der Mehrzahl der Knoten (20a bis 20f) eine vorbestimmte Teilmenge von Wellenlängen innerhalb einer Menge von Sendewellenlängen (λ₁, λ₂, ..., λ_{N}) selektiv verwendet, und jeder der Mehrzahl der Knoten (20a bis 20f) umfasst:
eine Mehrzahl optischer Add/Drop-Multiplexer (4, 5), die mit dem ersten optischen Träger (2) beziehungsweise dem zweiten optischen Träger (3) in Reihe verbunden sind, wobei jeder der optischen Add/Drop-Multiplexer (4, 5) dafür ausgelegt ist, wenigstens ein Hinzunehmen der Teilmenge von Wellenlängen zu dem ersten optischen Träger (2) und zu dem zweiten optischen Träger (3), ein Herausnehmen der Teilmenge von Wellenlängen aus dem ersten optischen Träger (2) und dem zweiten optischen Träger (3) und ein Vorbeileiten der übrigen Wellenlängen der Menge von Sendewellenlängen (λ₁, λ₂, ..., λ_{N}) auszuführen.

3. System nach Anspruch 1, bei dem jeder der Mehrzahl der Knoten (20a bis 20f) umfasst:
einen optischen Sender (Tx₁);
einen optischen Empfänger (Rx₁); und
eine rekonfigurierbare optische Schalteinheit (15, 15', 15", 115', 115"), die den optischen Sender (Tx₁) und den Empfänger (Rx₁) mit dem ersten optischen Träger (2) und dem zweiten optischen Träger (3) selektiv koppelt.

4. System nach Anspruch 3, bei dem jeder der Mehrzahl der Knoten (20a bis 20f) umfasst:
eine Mehrzahl von Informationseinfügevorrichtungen (TxTs), die mit dem optischen Sender (Tx₁) optisch gekoppelt und dafür ausgelegt sind, Signalisierungsinformation in die optischen Signale einzufügen; und
eine Mehrzahl von Informationsherausnahmevorrichtungen (RxTs), die mit dem optischen Empfänger (Rx₁) optisch gekoppelt und dafür ausgelegt sind, die Signalisierungsinformation aus den optischen Signalen herauszunehmen.

5. System nach Anspruch 4, bei dem die Mehrzahl der Informationseinfügevorrichtungen (TxTs) und die Mehrzahl der Informationsherausnahmevorrichtungen (RxTs) optische Transponder (TxT₁(λₓ), TxT₁(λ_{y}), TxT₂(λₓ), TxT₂(λy), RXT₁(λₓ), RXT₁(λ_{y}), RXT₂(λₓ), RXT₂(λ_{y})) umfassen, die die optische Schalteinheit (15, 15', 15", 115', 115") mit dem ersten optischen Träger (2) und dem zweiten optischen Träger (3) optisch koppeln, wobei die optischen Transponder (TxT₁(λₓ), TxT₁(λ_{y}), TxT₂(λₓ), TxT₂(λ_{y}), RXT₁(λₓ), RXT₁(λy), RXT₂(λₓ), RXT₂(λ_{y})) dafür ausgelegt sind, die Wellenlängen der optischen Signale zu ändem.

6. Verfahren zur Bereitstellung eines Selbstschutzes in einem optischen Ringnetzwerk, das einen ersten optischen Träger (2), einen zweiten optischen Träger (3) und eine Mehrzahl von Knoten (20a bis 20f) umfasst, die entlang des ersten optischen Trägers (2) und des zweiten optischen Trägers (3) verbunden und dafür ausgelegt sind, paarweise miteinander in Verbindung zu stehen, um bidirektionale Streckenabschnitte festzulegen, wobei das Verfahren die nachfolgenden Schritte umfasst:
ein Austauschen optischer Signale zwischen einem der Paare der Knoten (20a bis 20f) über einen der bidirektionalen Streckenabschnitte unter Verwendung einer ersten Wellenlänge (λₓ) auf dem ersten optischen Träger (2) und einer zweiten Wellenlänge (λ_{y}) auf dem zweiten optischen Träger (3) im Normalbetrieb, wobei die ersten und zweiten Wellenlängen (λₓ, λ_{y}) aus einer Menge von wenigstens drei Wellenlängen (λ₁, λ₂, ..., λ_{N}) ausgewählt sind;
ein Erfassen eines Wellenlängenfehlers in den bidirektionalen Streckenabschnitten; und
ein Rekonfigurieren der Knoten (20a bis 20f) in dem einen Paar zum Aufrufen eines Schutzschemas, das die erste Wellenlänge (λₓ) auf dem zweiten optischen Träger (3) und die zweite Wellenlänge (λ_{y}) auf dem ersten optischen Träger (2) verwendet, um den Wellenlängenfehler zu vermeiden,
**dadurch gekennzeichnet, dass** eine Reaktion auf einen Fehlerzustand auf einem Wellenlängenniveau ausgeführt wird, um eine betroffene Wellenlänge unter den ersten und zweiten Wellenlängen (λₓ, λ_{y}) umzuleiten, während die Kommunikation über den bidirektionalen Streckenabschnitt zwischen den Knoten (20a bis 20f) für nichtbetroffene Wellenlängen aus der Menge von wenigstens drei Wellenlängen (λ₁, λ₂, ..., λ_{N}) aufrechterhalten wird.

7. Verfahren nach Anspruch 6, des Weiteren umfassend:
ein Verwenden einer vorbestimmten Teilmenge von Wellenlängen innerhalb einer Menge von Sendewellenlängen (λ₁, λ₂, ..., λ_{N}), die von dem ersten optischen Träger (2) und dem zweiten optischen Träger (3) getragen werden, wobei der Schritt des Austauschens ein an jedem Knoten der Mehrzahl der Knoten (20a bis 20f) erfolgendes optisches Trennen jeder Wellenlänge der Teilmenge von Wellenlängen aus der Menge von Sendewellenlängen (λ₁, λ₂,.... λ_{N}) umfasst.

8. Verfahren nach Anspruch 6, bei dem der Schritt des Erfassens umfasst:
ein an jedem der Mehrzahl der Knoten (20a bis 20f) und für jede Wellenlänge in der Menge von Wellenlängen (λ₁, λ₂, ..., λ_{N}) erfolgendes Bestätigen, ob die optischen Signale empfangen worden sind.

9. Verfahren nach Anspruch 6, bei dem der Schritt des Erfassens umfasst:
ein an jedem der Mehrzahl der Knoten (20a bis 20f) und für jede Wellenlänge in der Menge von Wellenlängen (λ₁, λ₂, ..., λ_{N}) erfolgendes Bestätigen, ob die optischen Signale schlechter geworden sind.

10. Verfahren nach Anspruch 6, bei dem der Schritt des Erfassens umfasst:
ein an jedem der Mehrzahl der Knoten (20a bis 20f) und für jede Wellenlänge in der Menge von Wellenlängen (λ₁, λ₂, ..., λ_{N}) erfolgendes Bestätigen, ob die optischen Signale eine Fehlermeldung enthalten.

11. Verfahren nach Anspruch 6, des Weiteren umfassend:
ein Senden einer Fehlermeldung zwischen den Knoten (20a bis 20f) in dem einen Paar in Abhängigkeit von wenigstens einem Nichtempfang der optischen Signale und einem Empfang der schlechter gewordenen optischen Signale.

12. Verfahren nach Anspruch 6, bei dem der Schritt des Rekonfigurierens umfasst:
ein Schalten optischer Verbindungen, die einen optischen Sender (Tx₁) und einen optischen Empfänger (Rx₁) mit dem ersten optischen Träger (2) und dem zweiten optischen Träger (3) selektiv koppeln.

13. Rekonfigurierbarer Knoten eines selbstschützenden optischen Kommunikationsringnetzwerkes mit einem ersten optischen Träger (2) und einem zweiten optischen Träger (3), umfassend:
einen optischen Sender (Tx₁), der dafür ausgelegt ist, optische Signale zu erzeugen;
einen optischen Empfänger (Rx₁), der dafür ausgelegt ist, optische Signale zu empfangen;
eine Mehrzahl von Sendetranspondem (TxT₁(λₓ), TxT₁(λ_{y}), TxT₂(λₓ), TxT₂(λ_{y})), die mit dem ersten optischen Träger (2) und dem zweiten optischen Träger (3) optisch gekoppelt sind;
eine Mehrzahl von Empfangstranspondem (RXT₁(λₓ), RXT₁(λ_{y}), RXT₂(λₓ), RXT₂(λ_{y})), die mit dem ersten optischen Träger (2) und dem zweiten optischen Träger (3) optisch gekoppelt sind; und
eine optische Schalteinheit, die eine Mehrzahl optischer Schalter (22 bis 25) umfasst, die mit den Sendetranspondem (TxT₁(λₓ), TxT₁(λ_{y}), TxT₂(λₓ), TxT₂(λy)) und den Empfangstranspondem (RXT₁(λₓ), RXT₁(λ_{y}), RXT₂(λₓ), RXT₂(λ_{y})) gekoppelt sind, wobei einer der optischen Schalter (22 bis 25) mit dem optischen Sender (Tx₁) und ein weiterer der optischen Schalter (22 bis 25) mit dem optischen Empfänger (Rx₁) gekoppelt ist;
wobei die optischen Schalter (22 bis 25) dafür ausgelegt sind, selektiv in einem Normalbetriebszustand und in einem Fehlerzustand zu arbeiten, wobei die Transponder (TxT₁(λₓ), TxT₁(λ_{y}), TxT₂(λₓ), RXT₁(λ_{y}), RXT₂(λₓ) RXT₂(λ_{y})) im Normalzustand eine erste Wellenlänge (λₓ) auf dem ersten optischen Träger (2) und eine von der ersten Wellenlänge (λₓ) verschiedene zweite Wellenlänge (λ_{y}) auf dem zweiten optischen Träger (3) verwenden, und die Transponder (TxT₁(λₓ), TxT₁(λ_{y}), TxT₂(λₓ), RXT₁(λ_{y}), RXT₂(λₓ), RXT₂(λ_{y})) im Fehlerzustand die erste Wellenlänge (λₓ) auf dem zweiten optischen Träger (3) und die zweite Wellenlänge (λ_{y}) auf dem ersten optischen Träger (2) verwenden, wobei die ersten und zweiten Wellenlängen (λₓ, λ_{y}) aus einer Menge von wenigstens drei Wellenlängen (λ₁, λ₂, ..., λ_{N}) ausgewählt sind,
**dadurch gekennzeichnet, dass** die optischen Schalter (22 bis 25) dafür ausgelegt sind, dass eine Reaktion auf einen Fehlerzustand auf einem Wellenlängenniveau ausgeführt wird, um eine betroffene Wellenlänge unter den ersten und zweiten Wellenlängen (λₓ, λ_{y}) umzuleiten, während die Kommunikation entlang der ersten und zweiten Träger (2, 3) für nichtbetroffene Wellenlängen aus der Menge von wenigstens drei Wellenlängen (λ₁, λ₂, ..., λ_{N}) aufrechterhalten wird.

14. Knoten nach Anspruch 13,
bei dem die Mehrzahl der Sendetransponder (TxT₁(λₓ), TxT₁(λ_{y}), TxT₂(λₓ)) einen ersten Sendetransponder (TxT₁(λₓ)), der mit dem ersten optischen Träger (2) optisch gekoppelt und dafür ausgelegt ist, ein Signal bei der ersten Wellenlänge (λₓ) zu modulieren, einen zweiten Sendetransponder (TxT₁(λ_{y})), der mit dem ersten optischen Träger (2) optisch gekoppelt und dafür ausgelegt ist, ein Signal bei einer zweiten Wellenlänge (λ_{y}) zu modulieren, und einen dritten Sendetransponder (TxT₂(λₓ)) der mit einem zweiten optischen Träger (3) optisch gekoppelt und dafür ausgelegt ist, ein Signal bei der ersten Wellenlänge (λₓ) zu modulieren, umfasst,
bei dem die Mehrzahl der Empfangstransponder (RXT₁(λ_{y}), RXT₂(λₓ), RXT₂(λ_{y})) einen ersten Empfangstransponder (RXT₂(λₓ), der mit dem ersten optischen Träger (2) optisch gekoppelt und dafür ausgelegt ist, ein die erste Wellenlänge (λₓ) aufweisendes Signal zu demodulieren, einen zweiten Empfangstransponder (RXT₂(λ_{y})), der mit dem ersten optischen Träger (2) optisch gekoppelt und dafür ausgelegt ist, ein die zweite Wellenlänge (λ_{y}) aufweisendes Signal zu demodulieren, und einen dritten Empfangstransponder (RXT₁(λ_{y})), der mit dem zweiten optischen Träger (3) optisch gekoppelt und dafür ausgelegt ist, ein die zweite Wellenlänge (λ_{y}) aufweisendes Signal zu demodulieren, umfasst;
wobei im Normalzustand die optischen Schalter (22 bis 25) dafür ausgelegt sind, den optischen Sender (Tx₁) mit dem ersten Sendetransponder (TxT₁(λₓ)) und mit dem dritten Sendetransponder (TxT₂(λₓ)) zu verbinden, den ersten Empfangstransponder (RXT₂(λₓ)) mit dem dritten Sendetransponder (TxT₂(λₓ)) zu verbinden, den zweiten Empfangstransponder (RXT₂(λ_{y})) mit dem optischen Empfänger (Rx₁) zu verbinden und den dritten Empfangstransponder (RXT₁(λ_{y})) mit dem optischen Empfänger (Rx₁) und mit dem zweiten Sendetransponder (TxT₁(λ_{y}) zu verbinden.

15. Knoten nach Anspruch 14, des Weiteren umfassend:
einen weiteren optischen Sender (Tx₂), der dafür ausgelegt ist, ein optisches Signal zu erzeugen, das in dem Netzwerk zu sendende Information enthält; und
einen weiteren optischen Empfänger (Rx₂), der dafür ausgelegt ist, ein optisches Signal zu empfangen, das in dem Netzwerk gesendete Information enthält;
wobei die Mehrzahl der Sendetransponder (TxT₁(λₓ), TxT₁(λ_{y}), TxT₂(λₓ)) einen vierten Sendetransponder (TxT₂(λ_{y})) umfasst, der mit dem zweiten optischen Träger (3) optisch gekoppelt und dafür ausgelegt ist, ein Signal bei der zweiten Wellenlänge (λ_{y}) zu modulieren,
wobei die Mehrzahl der Empfangstransponder (RXT₁(λ_{y}), RXT₂(λₓ), RXT₂(λ_{y})) einen vierten Empfangstransponder (RXT₁(λₓ)) umfasst, der mit dem ersten optischen Träger (2) optisch gekoppelt und dafür ausgelegt ist, ein die erste Wellenlänge (λₓ) aufweisendes Signal im Normalbetrieb zu demodulieren,
wobei die optischen Schalter (22 bis 25) dafür ausgelegt sind, den ersten Empfangstransponder (RXT₂(λₓ)) mit dem dritten Empfangstransponder (TxT₂(λₓ) und mit dem weiteren Empfänger (Rx₂) zu verbinden, den vierten Empfangstransponder (RXT₁(λₓ)) mit dem weiteren Empfänger (Rx₂) zu verbinden und den weiteren optischen Sender (Tx₂) mit dem zweiten Sendetransponder (TxT₁(λ_{y})) und mit dem vierten Sendetransponder (TxT₂(λ_{y})) zu verbinden.

16. Knoten nach Anspruch 14, bei dem die erste Wellenlänge (λₓ) und die zweite Wellenlänge (λ_{y}) aus einer Menge von Sendewellenlängen (λ₁, λ₂, ..., λ_{N}) ausgewählt sind, und der Knoten des Weiteren umfasst:
eine Mehrzahl optischer Add-Drop-Multiplexer (4, 5), die dafür ausgelegt sind, die Sendetransponder (TxT₁(λₓ), TxT₁(λ_{y}), TxT₂(λₓ)) und die Empfangstransponder (RXT₁(λ_{y}), RXT₂(λₓ), RXT₂(λ_{y})) mit dem ersten optischen Träger (2) und dem zweiten optischen Träger (3) zu verbinden, um eine Teilmenge von Wellenlängen in die optischen Träger (2, 3) zu leiten und aus diesen herauszunehmen, und um die übrigen Wellenlängen der Menge von Sendewellenlängen (λ₁, λ₂, ..., λ_{N}) vorbeizuleiten.

17. Knoten nach Anspruch 14, bei dem die optischen Schalter (22 bis 25) 2×2-Schalter umfassen.

18. Knoten nach Anspruch 14, bei dem die optischen Schalter (22 bis 25) 1×2- und 2×1-Schalter umfassen.

19. Knoten nach Anspruch 17, bei dem die optischen Schalter (22 bis 25) diskrete Schaltkomponenten umfassen.

20. Knoten nach Anspruch 17, bei dem die optischen Schalter (22 bis 25) eine integrierte Schaltmatrix umfassen.

21. Knoten nach Anspruch 19, bei dem die optischen Schalter (22 bis 25) wenigstens einen optomechanischen Schalter, einen thermooptischen Schalter, einen magnetooptischen Schalter, einen Flüssigkristallschalter, einen Halbleiterschalter, einen elektrooptischen Schalter, einen mikromechanischen Schalter und einen Lithium-Niobat-IC-Schalter umfassen.

## Revendications

1. Système de communication optique auto-protégé, comprenant :
un premier porteur optique (2) configuré pour transporter des signaux optiques dans une première direction ;
un second porteur optique (3) configuré pour transporter des signaux optiques dans une seconde direction opposée à la première direction ; et
une pluralité de noeuds (20a-20f) connectés le long du premier porteur optique (2) et du second porteur optique (3) pour former des liaisons bidirectionnelles, la pluralité de noeuds (20a-20f) communiquant par paires, l'une des paires définissant une liaison de fonctionnement associée à une partie du premier porteur optique (2) et à une partie du second porteur optique (3) et étant configurée pour échanger des signaux optiques en utilisant une première longueur d'onde (λₓ) sur le premier porteur optique (2) et une seconde longueur d'onde (λ_{y}) différente de la première longueur d'onde (λₓ) sur le second porteur optique (3) en condition normale, la paire de noeuds (20a-20f) étant configurée pour échanger des signaux optiques en utilisant la première longueur d'onde (λₓ) sur le second porteur optique (3) et la seconde longueur d'onde (λ_{y}) sur le premier porteur optique (2) en condition de défaillance, moyennant quoi la première longueur d'onde (λₓ) et la seconde longueur d'onde (λ_{y}) sont sélectionnées à partir d'un ensemble d'au moins trois longueurs d'ondes (λ₁, λ₂, ... *λ*_{*N*} ),
**caractérisé en ce que** les noeuds (20a-20f) sont configurés de sorte qu'une réponse à une condition de défaillance est exécutée sur un niveau de longueur d'onde pour re-diriger une longueur d'onde affectée parmi la première longueur d'onde (λₓ) et la seconde longueur d'onde (λ_{y}), tout en maintenant la communication à travers les liaisons bidirectionnelles entre les noeuds pour les longueurs d'ondes non affectées parmi l'ensemble d'au moins trois longueurs d'ondes (λ₁, λ₂, ... λ_{N}).

2. Système selon la revendication 1, dans lequel chacun de la pluralité de noeuds (20a-20f) utilise sélectivement un sous-ensemble prédéterminé de longueurs d'ondes à l'intérieur d'un ensemble de longueurs d'ondes de transmission (λ₁, λ₂, ... λ_{*N*}), chacun de la pluralité de noeuds (20a-20f) comprenant :
une pluralité des multiplexeurs optiques d'ajout/abandon (4, 5) connectés en série respectivement au premier porteur optique (2) et au second porteur optique (3), chacun des multiplexeurs optiques d'ajout/abandon (4, 5) étant configuré pour effectuer sélectivement au moins l'un de l'ajout du sous-ensemble de longueurs d'ondes au premier porteur optique (2) et au second porteur optique (3), de l'abandon du sous-ensemble de longueurs d'ondes du premier porteur optique (2) et du second porteur optique (3), et de la dérivation des longueurs d'ondes restantes de l'ensemble de longueurs d'ondes de transmission (λ₁, λ₂, ... λ_{*N*}).

3. Système selon la revendication 1, dans lequel chacun de la pluralité de noeuds (20a-20f) comprend :
un émetteur optique (*Tx*₁) ;
un récepteur optique (*R*x₁) ; et
une unité de commutation optique reconfigurable (15, 15', 15", 115', 115") couplant sélectivement l'émetteur optique (*Tx*₁) et le récepteur optique (*Rx*₁) au premier porteur optique (2) et au second porteur optique (3).

4. Système selon la revendication 3, dans lequel chacun de la pluralité de noeuds (20a-20f) comprend :
une pluralité de dispositifs d'insertion d'information (TxTs) couplés optiquement à l'émetteur optique (Tx₁) et configurés pour insérer des informations de signalisation dans les signaux optiques ; et
une pluralité de dispositifs d'extraction d'information (RxTs) couplés optiquement au récepteur optique (*Rx*₁) et configurés pour extraire des informations de signalisation des signaux optiques.

5. Système selon la revendication 4, dans lequel la pluralité de dispositifs d'insertion d'information (TxTs) et la pluralité de dispositifs d'extraction d'information (RxTs) comprennent des transpondeurs optiques (*TxT*₁(*λ*_{*x*}), *TxT*₁(*λ*_{*y*}), *TxT*₂(*A*_{*x*}), *TxT*₂(*λ*_{*y*}), *RxT*_{*1*}(*λ*_{*x*}), *RxT*₁*(λ*_{*y*}), *RxT*_{*2*} *(λ*_{*x*}*), RxT*₂ (*λ*_{*y*})) couplant optiquement l'unité de commutation optique (15, 15', 15", 115', 115") au premier porteur optique (2) et au second porteur optique (3), les transpondeurs optiques (*TxT*₁ (*λ*_{*x*}), *TxT*_{*1*}*(λ*_{*y*}), *TxT*_{*2*}*(λ*_{*x*}*)*, *TxT*₂(*λ*_{*y*}), *RxT*₁(*λ*_{*x*}), *RxT*₁(*λ*_{*y*}), *RxT*₂(*λ*_{*x*}) *RxT*₂(*λ*_{*y*})) étant configurés pour changer les longueurs d'ondes des signaux optiques.

6. Méthode pour assurer une autoprotection dans un réseau optique en anneau qui comprend un premier porteur optique (2) et un second porteur optique (3), et une pluralité de noeuds (20a-20f) connectés le long du premier porteur optique (2) et du second porteur optique (3) et configurés pour communiquer par paires pour définir des liaisons bidirectionnelles, la méthode comprenant :
l'échange de signaux optiques entre l'une des paires de noeuds (20a-20f) sur l'une des liaisons bidirectionnelles en utilisant une première longueur d'onde (λ_{*x*}) sur le premier porteur optique (2) et une seconde longueur d'onde (λ_{y}) sur le second porteur optique (3) pendant un fonctionnement normal, moyennant quoi la première longueur d'onde (λₓ) et la seconde longueur d'onde (λ_{y}) sont sélectionnées à partir d'un ensemble d'au moins trois longueurs d'ondes (λ₁, λ₂, ... λ_{*N*}) ;
la détection d'une défaillance de longueur d'onde sur les liaisons bidirectionnelles ; et
la reconfiguration des noeuds (20a-20f) dans la paire pour appeler une logique de protection qui utilise la première longueur d'onde (λₓ) sur le second porteur optique (3) et la seconde longueur d'onde (λ_{y}) sur le premier porteur optique (2) pour éviter la défaillance de longueur d'onde,
**caractérisée en ce qu'**une réponse à une condition de défaillance est exécutée à un niveau de longueur d'onde pour re-diriger une longueur d'onde affectée parmi la première longueur d'onde (λₓ) et la seconde longueur d'onde (λ_{y}), tout en maintenant la communication à travers la liaison bidirectionnelle entre les noeuds (20a-20f) pour les longueurs d'ondes non affectées parmi l'ensemble d'au moins trois longueurs d'ondes (λ₁, λ₂, ... λ_{*N*}).

7. Méthode selon la revendication 6, comprenant en outre :
l'utilisation d'un sous-ensemble prédéterminé de longueurs d'ondes à l'intérieur d'un ensemble de longueurs d'ondes de transmission (λ₁, λ₂, ... *λ*_{*N*}) portées par le premier porteur optique (2) et le second porteur optique (3), dans laquelle l'étape consistant à effectuer l'échange comprend une séparation optique, au niveau de chaque noeud de la pluralité de noeuds (20a-20f), de chaque longueur d'onde du sous-ensemble de longueurs d'ondes à partir de l'ensemble de longueurs d'ondes de transmission (λ₁, λ₂, ... λ_{*N*}).

8. Méthode selon la revendication 6, dans laquelle l'étape consistant à effectuer la détection comprend :
une vérification, dans chacun de la pluralité de noeuds (20a-20f) et pour chaque longueur d'onde dans l'ensemble de longueurs d'ondes (λ₁, λ₂, ... λ_{*N*}), d'une réception éventuelle des signaux optiques.

9. Méthode selon la revendication 6, dans laquelle l'étape consistant à effectuer la détection comprend :
une vérification, dans chacun de la pluralité de noeuds (20a-20f) et pour chaque longueur d'onde dans l'ensemble de longueurs d'ondes (λ₁, λ₂, ... λ_{N}), d'une dégradation éventuelle des signaux optiques.

10. Méthode selon la revendication 6, dans laquelle l'étape consistant à effectuer la détection comprend :
une vérification, dans chacun de la pluralité de noeuds (20a-20f) et pour chaque longueur d'onde dans l'ensemble de longueurs d'ondes (λ₁, λ₂, ... λ_{*N*}), d'une présence éventuelle d'un message de défaillance dans les signaux optiques.

11. Méthode selon la revendication 6, comprenant en outre :
une transmission d'un message de défaillance entre les noeuds (20a-20f) dans la paire basée sur au moins l'une de la non réception des signaux optiques et de la réception des signaux optiques qui sont dégradés.

12. Méthode selon la revendication 6, dans laquelle l'étape consistant à effectuer la reconfiguration comprend :
la commutation des connexions optiques qui couplent sélectivement un émetteur optique (*Tx*₁) et un récepteur optique (*Rx*₁) au premier porteur optique (2) et au second porteur optique (3).

13. Noeud reconfigurable d'un réseau de communication optique en forme d'anneau auto-protégé ayant un premier porteur optique (2) et un second porteur optique (3), comprenant :
un émetteur optique (*Tx*₁) configuré pour générer des signaux optiques ;
un récepteur optique (Rx₁) configuré pour recevoir des signaux optiques ;
une pluralité de transpondeurs de transmission (*TxT*_{*1*}(*λ*_{*x*}), *TxT*_{*1*}*(λ*_{*y*}), *TxT*_{*2*}*(λ*_{*x*}*), TxT*_{*2*}*(λ*_{*y*}*))* couplés optiquement au premier porteur optique (2) et au second porteur optique (3) ;
une pluralité de transpondeurs de réception *(RxT*_{*1*} *(λ*_{*x*}), *RxT*_{*1*} *(λ*_{*y*}*)*, *RxT*_{*2*} *(λ*_{*x*}), *RxT*_{*2*}*(λ*_{*y*}*))* couplés optiquement au premier porteur optique (2) et au second porteur optique (3) ; et
une unité de commutation optique qui comprend une pluralité de commutateurs optiques (22-25) couplés aux transpondeurs de transmission *(TxT*₁ (*λ*_{*x*}), *TxT*₁(*λy*), *TxT*₂(*λ*_{*x*}), *TxT*₂(*λ*_{*y*})) et aux transpondeurs de réception *(RxT*₁(*λ*_{*x*}), *RxT*_{*1*}*(λ*_{*y*}), *RxT*₂(*λ*_{*x*}), *PxT*₂(*λ*_{*y*})), l'un des commutateurs optiques (22-25) étant couplé à l'émetteur optique (Tx₁), un autre des commutateurs optiques (22-25) étant couplé au récepteur optique (*Rx*₁);
dans lequel les commutateurs optiques (22-25) sont configurés pour fonctionner sélectivement selon une condition de fonctionnement normale et selon une condition de défaillance, les transpondeurs (*TxT*_{*1*}*(λ*_{*x*}), *TxT*_{*1*}*(λ*_{*y*}), *TxT*_{*2*} *(λ*_{*x*}); *RxT*₁ (*λ*_{*y*}), *RxT*₂ (*λ*_{*x*}), *RxT*_{*2*} (λ_{*y*})) utilisant une première longueur d'onde (λ_{*x*}) sur le premier porteur optique (2) et une seconde longueur d'onde (λ_{*y*}) qui est différente de la première longueur d'onde (λ_{*x*}) sur le second porteur optique (3) en condition normale, les transpondeurs *(TxT*₁ (*λ*_{*x*}), *TxT*₁(*λy*), *TxT*₂(*λ*_{*x*}), *RxT*_{*1*}*(λ*_{*y*}), *RxT*₂(λₓ), *RxT*₂(*λ*_{*y*})*)* utilisant la première longueur d'onde (λₓ) sur le second porteur optique (3) et la seconde longueur d'onde (λ_{y}) sur le premier porteur optique (2) en condition de défaillance, moyennant quoi la première longueur d'onde (λₓ) et la seconde longueur d'onde (λ_{y}) sont sélectionnées à partir d'un ensemble d'au moins trois longueurs d'ondes (λ₁, λ₂, ... λ_{*N*}),
**caractérisé en ce que** les commutateurs optiques (22-25) sont configurés de sorte qu'une réponse à une condition de défaillance est exécutée sur un niveau de longueur d'onde pour re-diriger une longueur d'onde affectée parmi la première longueur d'onde (λₓ) et la seconde longueur d'onde (λ_{y}), tout en maintenant la communication à travers le premier porteur optique (2) et le second porteur optique (3) pour les longueurs d'ondes non affectées parmi l'ensemble d'au moins trois longueurs d'ondes (λ₁, λ₂, ... λ_{*N*}).

14. Noeud selon la revendication 13, dans lequel la pluralité de transpondeurs de transmission (*TxT*₁(*λ*_{*x*}), *TxT*₁(*λ*_{*y*}), *TxT*₂ (λₓ)) comprennent un premier transpondeur de transmission (*TxT*₁(λₓ)) couplé optiquement au premier porteur optique (2) et configuré pour moduler un signal à la première longueur d'onde (*λ*_{*x*}), un deuxième transpondeur de transmission (*TxT*₁(*λ*_{*y*})) couplé optiquement au premier porteur optique (2) et configuré pour moduler un signal à une seconde longueur d'onde (λ_{y}), et un troisième transpondeur de transmission (*TxT*₂(*λ*_{*x*}) ) couplé optiquement à un second porteur optique (3) et configuré pour moduler un signal à la première longueur d'onde (λₓ), la pluralité de transpondeurs de réception ( (*RxT*_{*1*}(*λ*_{*y*}), *RxT*₂ (*λ*_{*x*}*), RxT*_{*2*}*(λ*_{*y*}*))* comprenant un premier transpondeur de réception (*RxT*_{*2*} (λₓ)) couplé optiquement au premier porteur optique (2) et configuré pour démoduler un signal ayant la première longueur d'onde (λₓ), un deuxième transpondeur de réception (*RxT*_{*2*}*(λ*_{*y*}*)*) couplé optiquement au premier porteur optique (2) et configuré pour démoduler un signal ayant la seconde longueur d'onde *(λ*_{*y*}), et un troisième transpondeur de réception (*RxT*_{*1*}*(λ*_{*y*}*)*) couplé optiquement au second porteur optique (3) et configuré pour démoduler un signal ayant la seconde longueur d'onde (λ_{y}) ;
dans lequel, en condition normale, les commutateurs optiques (22-25) sont configurés pour connecter l'émetteur optique (*Tx*₁) au premier transpondeur de transmission *(TxT*_{*1*} *(λ*_{*1*}*))* et au troisième transpondeur de transmission *(TxT*_{*2*} *(λ*_{*x*})), pour connecter le premier transpondeur de réception (RxT₂(λₓ)) au troisième transpondeur de transmission (TxT₂(λₓ)), pour connecter le deuxième transpondeur de réception (RxT₂(λ_{y})) au récepteur optique (Rx₁), et pour connecter le troisième transpondeur de réception *(RxT*_{*1*} *(λ*_{*y*}*))* au récepteur optique *(Rx*_{*1*}*)* et au deuxième transpondeur de transmission *(TxT*_{*1*} *(λ*_{*y*}*))*

15. Noeud selon la revendication 14, comprenant en outre :
un autre émetteur optique (Tx₂) configuré pour générer un signal optique qui comprend des informations à transmettre dans le réseau ; et
un autre récepteur optique (Rx₂) configuré pour recevoir un signal optique qui comprend des informations qui ont été transmises dans le réseau ;
dans lequel la pluralité de transpondeurs de transmission *(TxT*_{*1*} *(λ*_{*x*}), *TxT*_{*1*} *(λ*_{*y*}*), TxT*_{*2*} *(λ*_{*x*}*))* comprend un quatrième transpondeur de transmission *(TxT*_{*2*}*(λ*_{*y*}*))* couplé optiquement au second porteur optique (3) et configuré pour moduler un signal à la seconde longueur d'onde (λ_{y}), la pluralité de transpondeurs de réception (*RxT*_{*1*}*(λ*_{*y*}*), RxT*_{*2*}*(λ*_{*x*}*), RxT*_{*2*}*(λ*_{*y*}*))* comprenant un quatrième transpondeur de réception RxT₁(λₓ) couplé optiquement au premier porteur optique (2) et configuré pour démoduler un signal ayant la première longueur d'onde (λₓ) en condition normale, les commutateurs optiques (22-25) étant configurés pour connecter le premier transpondeur de réception (RxT₂ (λₓ)) au troisième transpondeur de transmission (*TxT*₂ (λₓ)) et à l'autre récepteur (Rx₂), pour connecter le quatrième transpondeurs de réception (*RxT*₁ (*λ*_{*x*})) à l'autre récepteur (Rx₂) et pour connecter l'autre émetteur optique (*Tx*₂) au deuxième transpondeur de transmission (*TxT*₁ (*λ*_{*y*})) et au quatrième transpondeur de transmission (*TxT*₂ *(λ*_{*y*})).

16. Noeud selon la revendication 14, dans lequel la première longueur d'onde (λₓ) et la seconde longueur d'onde (λ_{y}) sont sélectionnées à partir d'un ensemble de longueurs d'ondes de transmission (λ₁, λ₂, ... *λ*_{*N*}), le noeud comprenant en outre :
une pluralité de multiplexeurs d'ajout/abandon optiques (4, 5) configurés pour coupler optiquement les transpondeurs de transmission (*TxT*₁(*λ*_{*x*}), *TxT*₁(*λ*_{*y*}), *TxT*₂ (*λ*_{*x*})) et les transpondeurs de réception (*RxT*₁(*λ*_{*y*}), *RxT*₂(λₓ), *RxT*₂*(λ*_{*y*})) au premier porteur optique (2) et au second porteur optique (3) pour alimenter et extraire un sous-ensemble de longueurs d'ondes à partir des porteurs optiques (2, 3) et pour dériver les longueurs d'ondes restantes de l'ensemble de longueurs d'ondes de transmission (λ₁, λ₂, ... λ_{*N*}).

17. Noeud selon la revendication 14, dans lequel les commutateurs optiques (22-25) comprennent des commutateurs 2x2.

18. Noeud selon la revendication 14, dans lequel les commutateurs optiques (22-25) comprennent des commutateurs 1×2 et 2×1.

19. Noeud selon la revendication 17, dans lequel les commutateurs optiques (22-25) comprennent des composants de commutation discrets.

20. Noeud selon la revendication 17, dans lequel les commutateurs optiques (22-25) comprennent une matrice de commutation intégrée.

21. Noeud selon la revendication 19, dans lequel les commutateurs optiques (22-25) comprennent au moins l'un de commutateurs opto-mécaniques, de commutateurs thermo-optiques, de commutateurs magnéto-optiques, de commutateurs à cristaux liquides, de commutateurs à semi-conducteurs, de commutateurs électro-optiques, de commutateurs micromécaniques et de commutateurs à circuits intégrés au niobate de lithium.
